# EUROPEAN PATENT APPLICATION

(11) **EP 4 538 875 A1**
(43) Date of publication of application: **16.04.2025**
(21) Application number: 23864636.8
(22) Date of filing: 07.09.2023
(51) Int. Cl.: G06F 9/451

(54) **METHOD FOR REQUESTING VSYNC SIGNAL, AND ELECTRONIC DEVICE**

(30) Priority: 14.09.2022 CN 202211116851
(71) Applicant: Honor Device Co., Ltd., Shenzhen, Guangdong 518040 (CN)
(72) Inventor: XIN, Zhenwen, Shenzhen, Guangdong 518040 (CN); SUN, Wenyong, Shenzhen, Guangdong 518040 (CN); CHEN, Chuanfu, Shenzhen, Guangdong 518040 (CN); LI, Meijun, Shenzhen, Guangdong 518040 (CN)
(74) Representative: Gill Jennings & Every LLP
(86) International application number: PCT/CN2023/117580
(87) International publication number: WO 2024/055904

(57) **Abstract**

This application provides a method for requesting a vSync signal and an electronic device, and relates to the field of image display technologies. When a plurality of image frames that are dynamically changing and consecutive need to be displayed, a possibility of freezing and unsmoothness can be reduced. At a first moment, a first application in the electronic device calls a setVsyncRate interface of a window system SF in the electronic device to send a first request to the SF. The first request is for requesting a vSync signal. The SF periodically distributes the vSync signal to the first application in response to the first request. At a second moment, the first application calls the setVsyncRate interface to send a second request to the SF. The second request is for requesting to cancel the vSync signal. After receiving the second request, the SF ends the periodically distributing the vSync signal to the first application.

## Description

This application claims priority to Chinese Patent Application No. 202211116851.3, filed with the China National Intellectual Property Administration on September 14, 2022 and entitled "METHOD FOR REQUESTING VSYNC SIGNAL AND ELECTRONIC DEVICE", which is incorporated herein by reference in its entirety.

### TECHNICAL FIELD

This application relates to the field of image display technologies, and in particular, to a method for requesting a vSync signal and an electronic device.

### BACKGROUND

When a display screen of an electronic device such as a mobile phone and a tablet is turned on, an application may request a vertical synchronization (Vertical Synchronization, vSync) signal when the application needs to display a new image frame. In addition, after a refresh performed by the display screen of the electronic device is completed, the vSync signal may be distributed to the application that requests the vSync signal, to be specific, distributed to the application having a rendering requirement. The vSync signal may trigger the application to complete rendering of the new image frame, then the image frame is composed and finally sent for display. In this way, after the display screen performs refresh once, the application having the rendering requirement is triggered to start rendering a new image frame, then the image frame is composed and finally sent for display. This ensures that a quantity of frames per second (Frame Per Second, FPS) does not exceed a refresh rate of the display screen. For example, if a refresh rate is 60 Hertz (HZ), it can be ensured that an FPS does not exceed 60 frames per second.

However, during the implementation of embodiments of this application, the inventor finds that in conventional technologies, when a load of an electronic device is high, for example, when usage of a central processing unit (Central Processing Unit, CPU) is above 97%, latency for an application to request a vSync signal may be very long. If the request of the application for the vSync signal is not received timely, the vSync signal may not be naturally distributed to the application, so that the application cannot be triggered timely to complete rendering of a new image frame, and consequently, a display screen cannot obtain the new image frame, and finally only an original image is displayed. Especially when a plurality of image frames that are dynamically changing and consecutive need to be displayed, if the foregoing problems occur, freezing and unsmoothness may occur in a dynamic change process.

### SUMMARY

In view of this, this application provides a method for requesting a vSync signal and an electronic device. When a plurality of image frames that are dynamically changing and consecutive need to be displayed, a possibility of freezing and unsmoothness can be reduced.

According to a first aspect, an embodiment of this application provides a method for requesting a vSync signal, applied to an electronic device having a display function, such as a mobile phone or a tablet. A first application is installed on the electronic device. At a first moment, the first application in the electronic device calls a setVsyncRate interface of a window system SF in the electronic device to send a first request to the SF. The first request is for requesting a vSync signal. The SF periodically distributes the vSync signal to the first application in response to the first request.

It should be understood that the SF periodically distributes the vSync signal to the first application, and the first application may receive the vSync signal periodically. The vSync signal may trigger rendering of an image. The first application periodically receives the vSync signal and may render an image periodically. In this way, the first application only requests the vSync signal once and may complete rendering of a plurality of image frames without needing to request the vSync signal a plurality of times for the plurality of image frames. This can reduce cross-process calls between an application process and a SF process, and reduce dependence on a Binder thread. In this way, in a scenario in which a plurality of image frames that are dynamically changing and consecutive need to be displayed, a possibility of display freezing and unsmoothness can be reduced.

In addition, at a second moment, the first application calls the setVsyncRate interface to send a second request to the SF. The second request is for requesting to cancel the vSync signal. After receiving the second request, the SF ends the periodically distributing the vSync signal to the first application. In this way, after there is no need for the SF to periodically distribute the vSync signal, the SF may be triggered timely to end the periodically distributing the vSync signal to the first application, so that resource waste caused by long-term periodic distribution can be avoided.

In a possible design manner, the method further includes: determining, by the first application, that a plurality of image frames that are consecutive need to be rendered, where the first moment includes a moment when rendering of a first image is requested, and the first image is the first image frame among the plurality of image frames. In this way, when the first image frame among the plurality of image frames needs to be rendered, the setVsyncRate interface is called to request the vSync signal from the SF. In this way, after it is determined that the plurality of image frames that are consecutive need to be rendered, the SF may be enabled timely to start to periodically distribute the vSync signal and trigger the rendering of the plurality of image frames in sequence.

In a possible design manner, the first application records a first on/off state, and a second on/off state is recorded in a rendering module at a framework layer of the electronic device. Initial states of the first on/off state and the second on/off state are both off states. After the first application determines that the plurality of image frames that are consecutive need to be rendered, the method further includes: updating, by the first application, the first on/off state to an on state, so that the first on/off state indicates that the plurality of image frames that are consecutive need to be rendered.

That at a first moment, the first application in the electronic device calls a setVsyncRate interface of a window system SF in the electronic device to send a first request to the SF includes: at the first moment, sending, by the first application, a first message to the rendering module, where the first message is for requesting the vSync signal; and calling, by the rendering module, the setVsyncRate interface in response to the first message and in response to that the first on/off state is the on state and the second on/off state is the off state, to send the first request to the SF.

The first on/off state being the on state and the second on/off state being the off state indicate that the first application just changes from not needing to render the plurality of image frames that are consecutive to needing to render the plurality of image frames that are consecutive. Therefore, the rendering module needs to call the setVsyncRate interface to request the vSync signal, to trigger the SF timely to periodically distribute the vSync signal.

In a possible design manner, the first on/off state is the on state, the second on/off state is the off state, and the method further includes: updating, by the rendering module, the second on/off state to the on state, so that the second on/off state in the rendering module may also synchronously indicate that the first application needs to render the plurality of image frames that are consecutive.

In a possible design manner, the method further includes: at a third moment, skipping requesting, by the first application, the vSync signal from the SF, where the third moment is a moment when rendering of a second image is requested, and the second image is any other image among the plurality of image frames than the first image frame. In this way, when the second image frame and a subsequent image among the plurality of image frames need to be rendered, the first application may not repeatedly call the setVsyncRate interface to request the vSync signal from the SF. In this case, when the plurality of image frames that are consecutive need to be rendered, the vSync signal may be requested only once, to reduce cross-process calls.

Specifically, at the third moment, the first application sends a first message to the rendering module, where the first message is for requesting the vSync signal. The rendering module skips requesting the vSync signal from the SF in response to the first message and in response to that the first on/off state is the on state and the second on/off state is the on state. The first on/off state being the on state indicates that the first application needs to render the plurality of image frames that are consecutive. However, the second on/off state being also the on state indicates that the first application does not just change from not needing to render the plurality of image frames that are consecutive to needing to render the plurality of image frames that are consecutive. In this case, the rendering module does not need to repeatedly call the setVsyncRate interface to request the vSync signal. In this way, when the first on/off state is the on state and the second on/off state is the on state, there is no need to repeatedly call a requestNextVsync interface to request the vSync signal. This can avoid repeatedly calling the requestNextVsync interface to request the vSync signal, and ensure that in a scenario in which a plurality of image frames that are consecutive need to be rendered, a vSync signal is only requested once by calling a requestNextVsync interface.

In a possible design manner, the method further includes: determining, by the first application, to end rendering of the plurality of image frames that are consecutive, where the second moment includes a moment when rendering of a third image is requested, and the third image is the first image frame that needs to be rendered by the first application after the rendering of the plurality of image frames is completed. In this way, after the rendering of the plurality of image frames is completed, and a new image frame needs to be rendered, the setVsyncRate interface is called to request the SF to cancel the vSync signal, so that after the rendering of the plurality of image frames is completed, the SF may be enabled timely to end the periodically distributing the vSync signal, to save resources.

In a possible design manner, after the determining, by the first application, to end rendering of the plurality of image frames that are consecutive, the method further includes: updating, by the first application, the first on/off state to the off state. That at a second moment, the first application calls the setVsyncRate interface to send a second request to the SF includes: at the second moment, sending, by the first application, a first message to the rendering module, where the first message is for requesting the vSync signal; and calling, by the rendering module, the setVsyncRate interface in response to the first message and in response to that the first on/off state is the off state and the second on/off state is the on state, to send the second request to the SF.

The first on/off state being the off state and the second on/off state being the on state indicate that the first application just changes from needing to render the plurality of image frames that are consecutive to not needing to render the plurality of image frames that are consecutive. Therefore, the rendering module needs to first call the setVsyncRate interface to request to cancel the vSync signal, to avoid that the SF still periodically distributes the vSync signal after the need to render the plurality of image frames that are consecutive is completed.

In a possible design manner, the first on/off state is the off state, the second on/off state is the on state, and the method further includes: updating, by the rendering module, the second on/off state to the off state, so that the second on/off state in the rendering module may also synchronously indicate that the first application does not need to render the plurality of image frames that are consecutive.

In a possible design manner, after the sending the second request to the SF, the method further includes: calling, by the first application, a requestNextVsync interface of the SF to send a third request to the SF, where the third request is for requesting the vSync signal; and distributing, by the SF, the vSync signal to the first application once in response to the third request.

In this way, according to the method in this embodiment, after triggering the SF to end the periodically distributing the vSync signal, the vSync signal may be further requested from the SF, so that the SF can distribute the vSync signal to trigger the first application to render the first image frame after the plurality of image frames. In this case, after the rendering of the plurality of image frames that are consecutive ends, the vSync signal is requested once and distributed once.

In a possible design manner, that the SF periodically distributes the vSync signal to the first application includes: periodically distributing, by the SF, the vSync signal to the rendering module. It should be understood that the first application requires the rendering module to implement rendering. If the SF distributes the vSync signal to the rendering module, the rendering module may be triggered to complete image rendering of the first application. Therefore, the SF distributing the vSync signal to the rendering module is equivalent to distributing the vSync signal to the first application.

In a possible design manner, the method further includes: sending, by the first application, the first message to the rendering module when the first application needs to render a fourth image, where the fourth image is any image frame that needs to be displayed by the first application, and the fourth image includes the first image or the second image; and recording, by the rendering module, a first mark in response to the first message, and deleting the first mark after receiving the vSync signal from the SF. Each time receiving the vSync signal from the SF, the rendering module may determine whether a processing state is an unprocessed state. If the processing state is the unprocessed state, it indicates that the first application has an image that needs to be rendered. In this case, the rendering module may be triggered to render the image, and the processing state is updated to a processed state. If the processing state is not the unprocessed state, it indicates that the first application does not have an image that needs to be rendered. In other words, the vSync signal currently received is redundant. It should be understood that if the vSync signal is requested from the SF by calling the requestNextVsync interface, the SF may request and distribute the vSync signal once and may not distribute a redundant vSync signal. Therefore, the redundant vSync signal is most likely distributed periodically by the SF after the vSync signal is requested from the SF by calling the setVsyncRate interface. The first application requests the SF to cancel the vSync signal at the second moment. In this case, the second moment may be a moment when the rendering module receives the vSync signal from the SF when the rendering module includes no first mark. In this way, after detecting a redundant vSync signal, the rendering module may trigger the SF timely to end the periodically distributing the vSync signal.

In a possible design manner, the method further includes: at the second moment, notifying, by the rendering module, the first application to update the first on/off state to the off state, and updating the second on/off state to the off state, so that the first on/off state and the second on/off state both indicate the end of rendering the plurality of image frames that are consecutive.

In a possible design manner, the method further includes: at a fourth moment, sending, by the first application, a first message to the rendering module, where the first message is for requesting the vSync signal; and calling, by the rendering module, the requestNextVsync interface in response to the first message and in response to that the first on/off state and the second on/off state are both the off states, and sending a fourth request to the SF, where the fourth request is for requesting the vSync signal.

The first on/off state being the off state indicates that the first application does not need to render the plurality of image frames that are consecutive. In addition, a local on/off state of the rendering module being an off state indicates that the rendering of the plurality of image frames that are consecutive is not just ended. In this case, the rendering module does not need to call the requestNextVsync interface to request to cancel the vSync signal. In this way, when the first on/off state and the second on/off state are both the off states, the requestNextVsync interface may be called to request the vSync signal.

In a possible design manner, the SF is located at a native layer of the electronic device, the first application is located at an application layer of the electronic device, and before the sending a first request to the SF, the method further includes: adding a first interface to the framework layer of the electronic device, and adding a second interface to a Java native interface layer of the electronic device, where the first interface and the second interface are interfaces of the setVsyncRate interface that are open to Java. That the first application calls the setVsyncRate interface includes: calling, by the first application, the setVsyncRate interface through the first interface and the second interface in sequence.

In other words, according to this embodiment, the first application and the SF in the native layer are interlinked through the first interface, the second interface, and the setVsyncRate interface, so that the application can call the setVsyncRate interface to request the vSync signal from the SF.

In a possible design manner, the first request includes a periodicity n, n ≥ 1, and n is an integer. That the SF periodically distributes the vSync signal to the first application in response to the first request includes: in response to the first request, distributing, by the SF, the vSync signal once to the first application after the SF receives the vSync signal every n times.

In other words, according to this embodiment, the first application may flexibly specify a periodicity for the SF to distribute the vSync signal according to a display requirement.

According to a second aspect, an embodiment of this application provides an electronic device. The electronic device includes a memory and a processor. The memory is coupled to the processor. The memory stores computer program code. The computer program code includes computer instructions. When the computer instructions are executed by the processor, the electronic device is enabled to perform the method according to the first aspect and any possible design manner thereof.

According to a third aspect, an embodiment of this application provides a chip system. The chip system is used in an electronic device including a display screen and a memory. The chip system includes one or more interface circuits and one or more processors. The interface circuit is interconnected to the processor through a line. The interface circuit is configured to receive a signal from the memory of the electronic device and send the signal to the processor. The signal includes computer instructions stored in the memory. When the processor executes the computer instructions, the electronic device performs the method according to the first aspect and any possible design manner thereof.

According to a fourth aspect, this application provides a computer storage medium. The computer storage medium includes computer instructions. When the computer instructions are run on an electronic device, the electronic device is enabled to perform the method according to the first aspect and any possible design manner thereof.

According to a fifth aspect, this application provides a computer program product. When the computer program product runs on a computer, the computer is enabled to perform the method according to the first aspect and any possible design manner thereof.

It may be understood that, for beneficial effects that can be achieved by the electronic device according to the second aspect, the chip system according to the third aspect, the computer storage medium according to the fourth aspect, and the computer program product according to the fifth aspect, refer to the beneficial effects in the first aspect and any possible design manner thereof. Details are not described herein again.

### BRIEF DESCRIPTION OF DRAWINGS

FIG. 1A to FIG. 1F are a schematic diagram of an interface of a home screen motion effect according to an embodiment of this application;
FIG. 2 is a schematic diagram of an image processing process according to an embodiment of this application;
FIG. 3 is a sequence diagram of an image processing method according to an embodiment of this application;
FIG. 4A to FIG. 4E are a schematic diagram of an interface of another home screen motion effect according to an embodiment of this application;
FIG. 5 is a schematic diagram of a principle of a method for requesting a vSync signal according to an embodiment of this application;
FIG. 6 is a diagram of a hardware structure of an electronic device according to an embodiment of this application;
FIG. 7 is a diagram of a software architecture of an electronic device according to an embodiment of this application;
FIG. 8 is a sequence diagram of a method for requesting a vSync signal according to an embodiment of this application;
FIG. 9 is a schematic diagram of a state transition of a request state according to an embodiment of this application;
FIG. 10A to FIG. 10C are a sequence diagram of another method for requesting a vSync signal according to an embodiment of this application;
FIG. 11A to FIG. 11C are a sequence diagram of still another method for requesting a vSync signal according to an embodiment of this application;
FIG. 12 is a sequence diagram of yet another method for requesting a vSync signal according to an embodiment of this application; and
FIG. 13 is a schematic diagram of a structure of a chip system according to an embodiment of this application.

### DESCRIPTION OF EMBODIMENTS

Technical solutions in embodiments of this application are described below with reference to the accompanying drawings in embodiments of this application. In descriptions of embodiments of this application, terms used in the following embodiments are only intended to describe particular embodiments, and are not intended to limit this application. As used in this specification and the appended claims of this application, a singular expression form, "a", "the", "foregoing", "said", or "this", is intended to also include an expression form of "one or more", unless clearly indicated to the contrary in the context. It should be further understood that, in the following embodiments of this application, "at least one" and "one or more" mean one or more than two (including two). The term "and/or" is used to describe an association relationship between associated objects, indicating that there are three types of relationships. For example, A and/or B may represent: only A exists, both A and B exist, and only B exists, where A and B may be singular or plural. The character "/" generally indicates an "or" relationship between the associated objects.

Reference to "one embodiment" or "some embodiments" described in this specification means that a specific characteristic, structure, or feature described in combination with this embodiment is included in one or more embodiments of this application. Therefore, statements such as "in one embodiment", "in some embodiments", "in some other embodiments", and "in some additional embodiments" in different places in this specification do not necessarily mean referring to a same embodiment. Instead, the statements mean "one or more but not all of embodiments", unless otherwise specifically emphasized in another manner. The terms "include", "contain", "have", and their variations mean "including but not limited to", unless otherwise specially emphasized in other ways. The term "connection" includes a direct connection and an indirect connection, unless otherwise specified. The terms "first" and "second" are used for descriptive purposes only and should not be construed as indicating or implying relative importance or implicitly indicating a quantity of technical features indicated.

In embodiments of this application, the term such as "example" or "for example" is used to represent giving an example, an illustration, or a description. Any embodiment or design solution described by using "example" or "for example" in embodiments of this application should not be explained as being more preferred or having more advantages than another embodiment or design solution. Exactly, use of the term such as "example" or "for example" is intended to present a related concept in a specific manner.

An embodiment of this application provides a method for requesting a vSync signal, and the method may be applied to a scenario in which a plurality of image frames that are dynamically changing and consecutive need to be displayed. The scenario in which a plurality of image frames that are dynamically changing and consecutive need to be displayed is specifically a scenario in which an application needs to continue to display sliding, scaling, and another motion effect after a touch operation by a user ends.

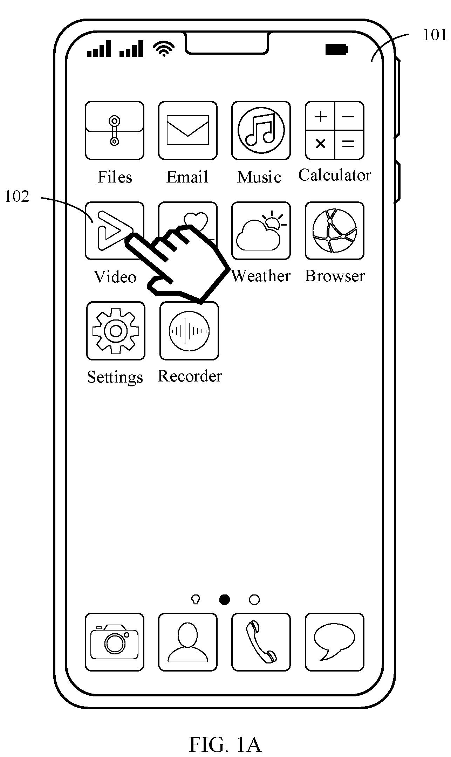

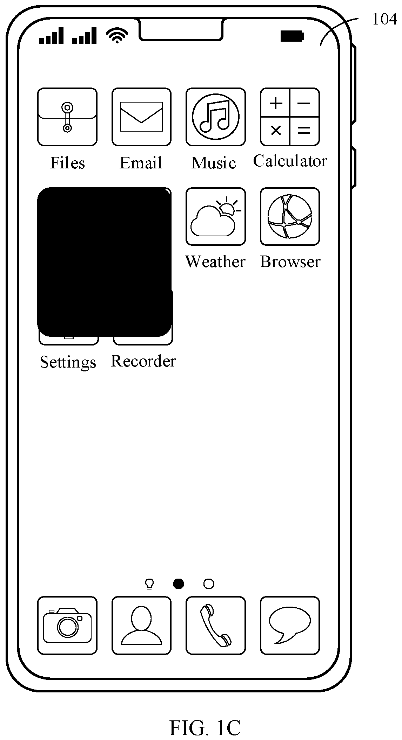

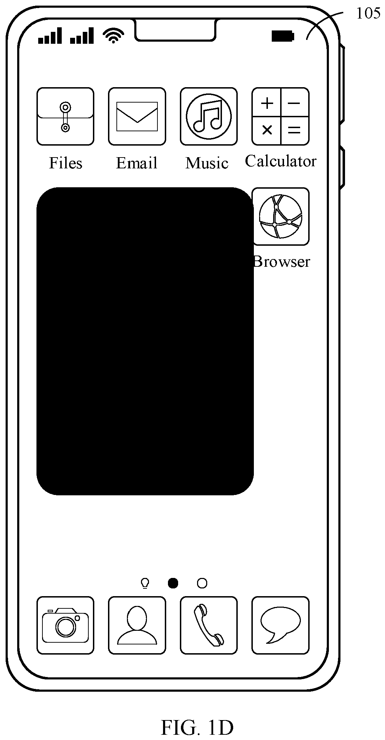

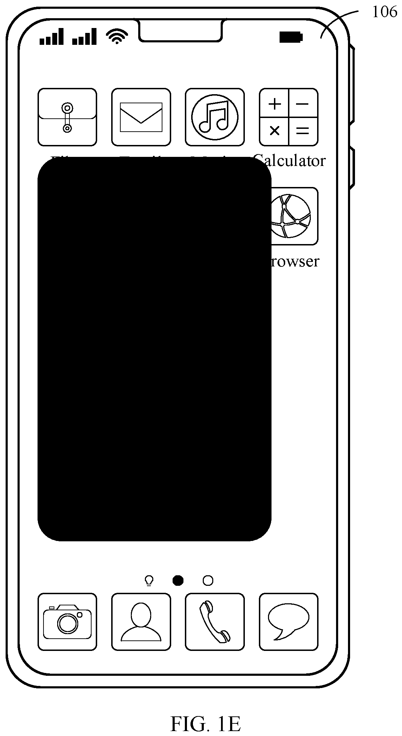

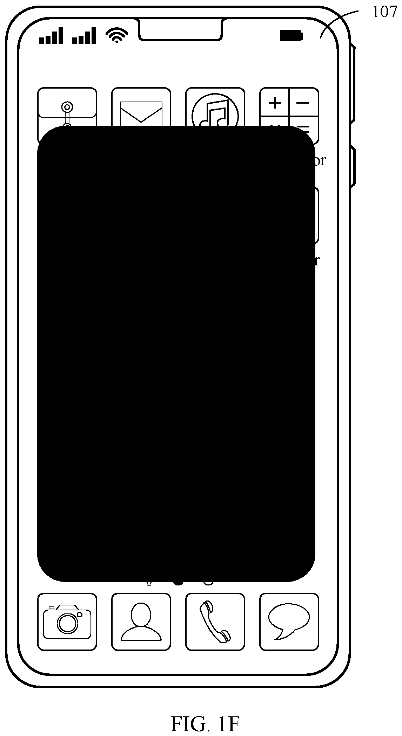

For example, refer to FIG. 1A to FIG. 1F. After detecting a tap operation by a user on an application icon 102 of a video application on a home screen 101 (in other words, after the tap operation ends), a mobile phone may display a dynamically changing motion effect shown in a home screen 103, a home screen 104, a home screen 105, a home screen 106, and a home screen 107 in sequence for transition, and finally display an application interface (not shown in FIG. 1A to FIG. 1F) of the video application. The foregoing scenario shown in FIG. 1A to FIG. 1F is the scenario in which a plurality of image frames that are dynamically changing and consecutive need to be displayed.

Generally, display of an image frame includes three steps: rendering, composition, and sending for display. An application that generates a to-be-displayed image performs the rendering step to complete rendering of content in each layer of the to-be-displayed image. Then, the application sends layer data obtained by the rendering to a window system (SurfaceFlinger, SF), and the SF performs the composition step based on the layer data to complete layer composition and obtain a to-be-processed image. Next, the SF performs the sending for display step and sends the to-be-displayed image to a display screen for display.

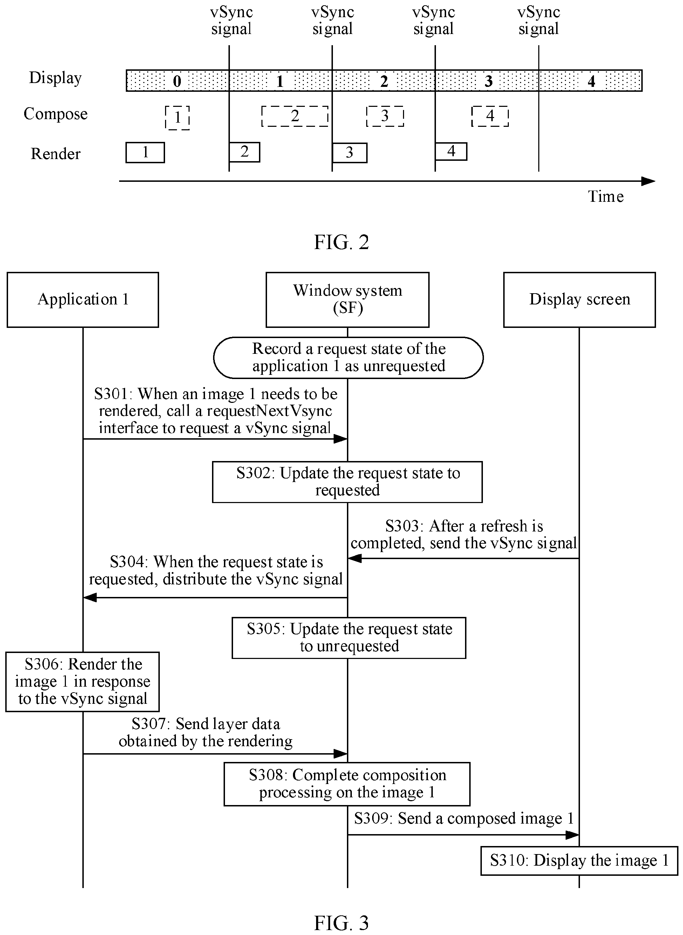

In addition, refer to FIG. 2. Numbers 1 to 4 represent the first image frame to the fourth image frame, solid-line unfilled rectangular boxes represent a rendering process, dashed-line unfilled rectangular boxes represent a composition process, and solid-line filled rectangular boxes represent a display process. Clearly, except for the first image frame, rendering of other images is triggered by a vSync signal. Specifically, the display screen performs refresh at a refresh rate of the display screen. For example, if the refresh rate of the display screen is 60 HZ, in other words, the display screen performs refresh 60 times per second, the display screen may perform refresh at a time interval of 1/60s ≈ 16.67 ms. Certainly, the refresh rate of the display screen may alternatively be 90 Hz, 120 Hz, or the like. After the display screen completes a refresh, a vSync signal is generated and distributed to an application by the SF to trigger the application to start rendering. After the rendering by the application is completed, the SF then performs composition, and finally sends a composed image for display. In this way, each time the display screen performs refresh, rendering is triggered and a new image frame is composed. Therefore, it can be ensured that FPS does not exceed the refresh rate of the display screen.

During the use of an electronic device, different applications have different rendering requirements. Generally, whether an application has a rendering requirement needs to be determined based on its own display logic. FIG. 1A to FIG. 1F is used as an example. Only Launcher knows that after the tap operation by the user on the application icon on the home screen is detected, the motion effects corresponding to the home screen 103 to the home screen 107 need to be displayed. Correspondingly, a plurality of image frames included in the motion effects need to be rendered consecutively. For example, the home screen 103 to the home screen 107 correspond to the first frame to the fifth frame of the motion effect in sequence, then five motion effect frames need to be rendered consecutively. In this case, the application needs to request a vSync signal from SF after generating a rendering requirement, to indicate the SF to further distribute the vSync signal after receiving the vSync signal from a display screen, so that the application (such as Launcher) with the rendering requirement can be triggered to start rendering, to satisfy the rendering requirement.

In some embodiments, refer to FIG. 3. A specific implementation from an application generating a rendering requirement to finally displaying an image frame includes:
S301: When an application 1 needs to render an image 1, the application 1 calls a requestNextVsync interface of SF to request a vSync signal from the SF.

The application 1 (also referred to as a first application) may be any application in an electronic device, and the image 1 is any image frame that needs to be displayed by the application 1. The SF may be configured to distribute the vSync signal to an application with a rendering requirement (such as the application 1), to trigger the application (such as the application 1) to start rendering. The requestNextVsync interface in the SF is used by the application (such as the application 1) to request the vSync signal, to be specific, used by the application (such as the application 1) to request the SF to distribute the vSync signal to the application (such as the application 1), to trigger the application (such as the application 1) to start the rendering.

An example in which the application 1 is Launcher is used. When determining that the first frame of the motion effect corresponding to the home screen 103 shown in FIG. 1A to FIG. 1F needs to be rendered, the Launcher may call the requestNextVsync interface of the SF to request a vSync signal, to be specific, request the SF to distribute a vSync signal to the Launcher, to trigger the Launcher to start rendering the first frame of the motion effect.

In this embodiment, the application 1 requesting the vSync signal by calling the requestNextVsync interface has the following features: After the application 1 requests the vSync signal once, the SF only distributes the vSync signal to the application 1 once, to trigger the application 1 only to complete the rendering of the image 1. Subsequently, if the application 1 needs to continue rendering, for example, rendering an image 2, an image 3, ..., the application 1 needs to call the requestNextVsync interface again to request the vSync signal.

For example, a request state of the application 1 is recorded in the SF, and the request state includes two types: unrequested and requested. An initial state of the request state is unrequested. After receiving the request of the application 1 for the vSync signal, the SF updates the request state to requested, as shown in S302 below, to indicate that the application 1 has a rendering requirement. After distributing the vSync signal to the application 1 once, the SF updates the request state to unrequested, as shown in S305 below, to indicate that the application 1 has no rendering requirement.

S302: The SF updates the request state to requested.

S303: After completing a refresh, the display screen sends the vSync signal to the SF.

After completing each refresh, the display screen may send the vSync signal to the SF to indicate the start of a display process of a next image frame, such as rendering, composition, and sending for display.

It should be understood that the display screen refreshes the display at a refresh rate of the display screen. For example, if the refresh rate of the display screen is 60 Hertz (HZ), in other words, the display screen performs refresh 60 times per second, the display screen may refresh the display at a time interval of 1/60s ≈ 16.67 ms.

S304: When the request state is requested, the SF distributes the vSync signal to the application 1.

After receiving the vSync signal, the SF may query the request state of the application 1. If it is queried that the request state is requested, it indicates that the application 1 has a rendering requirement. In this case, the SF distributes the vSync signal to the application 1, to trigger the application 1 to start rendering.

It should be understood that if a plurality of applications request the vSync signal, it indicates that the plurality of applications have rendering requirements, and the SF needs to distribute the vSync signal to the plurality of applications.

S305: The SF updates the request state to unrequested.

S306: The application 1 renders the image 1 in response to the vSync signal.

Each time receiving the vSync signal, the application 1 may start the rendering, to keep a frame rate of the application consistent with a digital display rate of the display screen.

S307: The application 1 sends layer data obtained by the rendering to the SF.

S308: The SF completes composition processing on the image 1.

The SF may alternatively be configured for the composition processing. The composition processing is mainly to compose one or more layers.

S309: The SF sends a composed image 1 to the display screen.

S310: The display screen displays the image 1.

According to this embodiment, when the application 1 needs to render any image frame, the application 1 may request the vSync signal by calling the requestNextVsync interface of the SF. Subsequently, the SF may distribute the vSync signal once to the application 1, to trigger the application 1 to complete rendering of an image frame. Correspondingly, in a scenario in which a plurality of image frames that are dynamically changing and consecutive need to be displayed, the application 1 needs to consecutively render the plurality of image frames. Correspondingly, the application 1 needs to call the requestNextVsync interface of the SF a successive quantity of times to request the vSync signal. FIG. 1A to FIG. 1F is used as an example. The application 1 is Launcher. When the Launcher needs to render the first frame of the motion effect corresponding to the home screen 103, the Launcher needs to call the requestNextVsync interface to request the vSync signal for the first time; when the Launcher needs to render the second frame of the motion effect corresponding to the home screen 104, the Launcher needs to call the requestNextVsync interface to request the vSync signal for the second time; ...; and when the Launcher needs to render the fifth frame of the motion effect corresponding to the home screen 107, the Launcher needs to call the requestNextVsync interface to request the vSync signal for the fifth time.

However, the application 1 calling the requestNextVsync interface of the SF is a cross-process call between different processes, and requires a Binder thread in the SF to implement the calling. A priority of the Binder thread is low. When a load of the electronic device is high, for example, when CPU usage is as high as 97% and above, the electronic device usually cannot allocate CPU resources to the Binder thread first for processing the calling for the requestNextVsync interface, and the Binder thread can only wait for the CPU resources. As a result, the Binder thread may be in a state of waiting for resources (that is, Runnable) for a long time and cannot process the calling for the requestNextVsync interface timely. In this case, the SF may alternatively not receive the request of the application 1 for the vSync signal timely. Subsequently, when receiving the vSync signal, the SF may not distribute the vSync signal to the application 1 and cannot trigger the application 1 to render an image. Finally, only a historical image can be displayed on the display screen, and no new image frame can be displayed. Especially in the scenario in which a plurality of image frames that are dynamically changing and consecutive need to be displayed, if the application 1 needs to render the plurality of image frames that are consecutive, the application 1 needs to frequently use the Binder thread to process the calling for the requestNextVsync interface. In this case, the foregoing problems are more likely to exist.

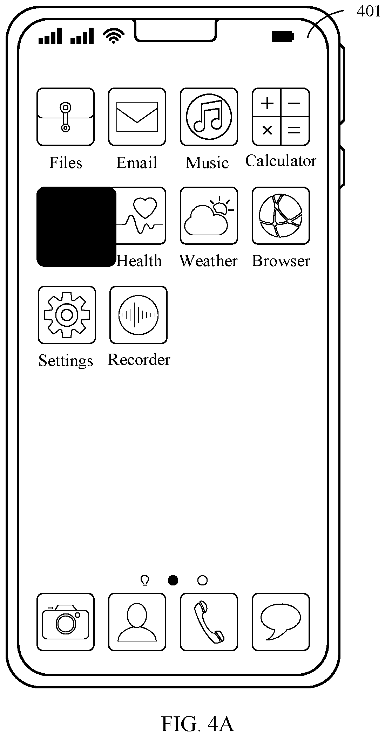

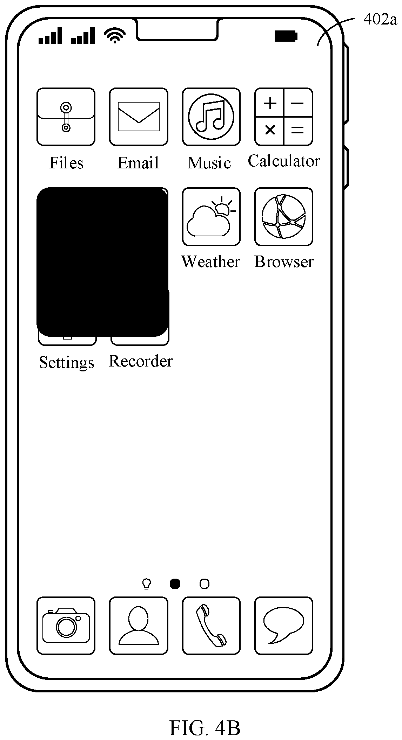

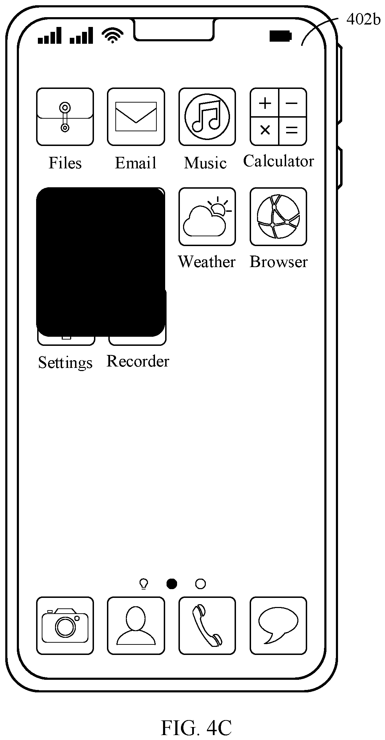

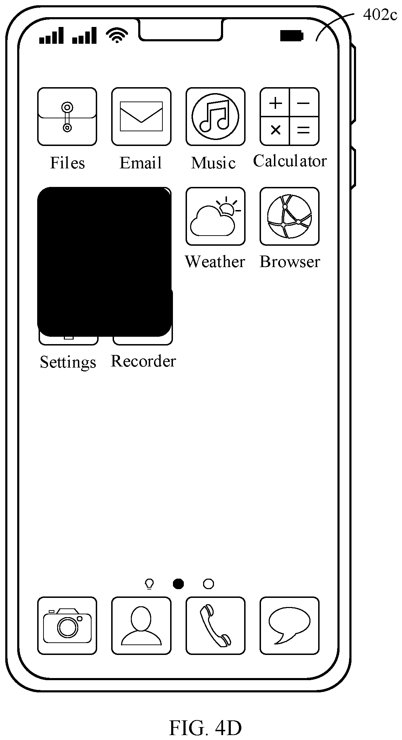

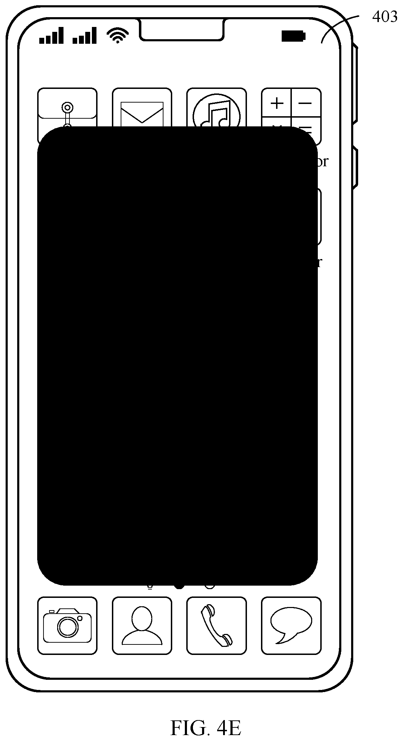

In addition, in the scenario in which a plurality of image frames that are dynamically changing and consecutive need to be displayed, if a new image frame cannot be displayed timely, display freezing and unsmoothness may be finally caused in a process of dynamically changing. As shown in FIG. 4A to FIG. 4E, when a load of a mobile phone is normal, an image may be displayed based on the process shown in FIG. 3. The first frame of a motion effect (such as a home screen 401) and the second frame of the motion effect (such as a home screen 402a) may be displayed on a display screen in sequence. After that, the load of the mobile phone increases, and the image cannot be displayed based on the process shown in FIG. 3. Only the second frame of the motion effect, such as a home screen 402b and a home screen 402c, is always displayed on the display screen. Later, when the load of the mobile phone is reduced, the mobile phone may continue to display the image based on the process shown in FIG. 3. However, in this case, the fifth frame of the motion effect needs to be rendered, and Launcher may render the fifth frame of the motion effect. Finally, the fifth frame of the motion effect corresponding to a home screen 403 may be displayed. Clearly, freezing occurs, because the display screen consecutively displays the second frame of the motion effect in three frames. In addition, the second frame of the motion effect is transitioned directly to the fifth frame of the motion effect, and transition of the motion effect is not smooth.

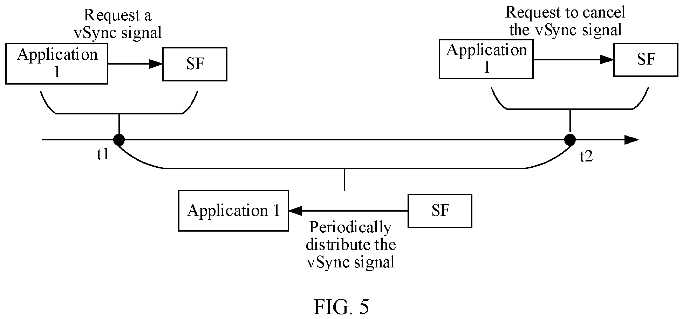

Based on the foregoing problems, an embodiment of this application provides a method for requesting a vSync signal. The method may be applied to a scenario similar to FIG. 1A to FIG. 1F, in which a plurality of image frames that are dynamically changing and consecutive need to be displayed. In the scenario, a corresponding application needs to render a plurality of image frames that are consecutive. Refer to FIG. 5. After determining that a plurality of image frames need to be rendered consecutively, an application 1 may call a setVsyncRate interface of SF to request a vSync signal from the SF (for example, to request at a moment t1 in FIG. 5). After receiving a request of the application 1 for the vSync signal through the setVsyncRate interface, the SF periodically distributes the vSync signal to the application 1, to periodically trigger the application 1 to render an image. In this way, the application 1 can render the plurality of image frames that are consecutive. Then, after determining to end the rendering of the plurality of image frames that are consecutive, the application 1 may call the setVsyncRate interface of the SF to request the SF to cancel the vSync signal (for example, to request at a moment t2 in FIG. 5). After receiving the request of the application 1 for canceling the vSync signal through the setVsyncRate interface, the SF ends the periodically distributing the vSync signal to the application 1. For convenience of description, the moment t1 may be referred to as a first moment, the moment t2 may be referred to as a second moment, the request for calling the setVsyncRate interface to request the vSync signal is referred to as a first request, and the request for calling the setVsyncRate interface to request to cancel the vSync signal is referred to as a second request.

In conclusion, according to this embodiment of this application, the application 1 only needs to request the vSync signal from the SF once, and then the application 1 may receive the vSync signal periodically distributed by the SF, to periodically trigger the application 1 to start rendering. Especially, in a scenario in which a plurality of image frames that are dynamically changing and consecutive need to be displayed, the SF periodically distributes the vSync signal, to periodically trigger the application 1 to complete rendering of the plurality of image frames that are consecutive. There is no need for the application 1 to request the vSync signal a plurality of times consecutively, so that a quantity of cross-process calls can be greatly reduced, and dependence on a Binder thread can be reduced. In this way, a possibility of display freezing and unsmoothness in a dynamic change process can be reduced. In addition, the application 1 may request to cancel the vSync signal, so that the SF ends the periodically distributing the vSync signal to the application 1, to avoid resource waste caused by long-term periodic distribution.

The scenario in which a home screen motion effect is displayed shown in FIG. 1A to FIG. 1F is still used as an example. After the Launcher detects the tap operation by the user on the application icon 102 of the video application on the home screen 101, the Launcher may determine that the motion effect of the plurality of frames shown on the home screen 103 to the home screen 107 need to be rendered. In other words, the plurality of image frames that are consecutive need to be rendered. In this case, the Launcher may call the setVsyncRate interface of the SF to request the vSync signal from the SF, to trigger the SF to periodically distribute the vSync signal to the Launcher. The periodic vSync signal may trigger the Launcher to render the motion effect of the plurality of frames shown on the home screen 103 to the home screen 107 in sequence. After completing the rendering of the motion effect of the plurality of frames, the Launcher may determine to end rendering the plurality of image frames that are consecutive. In this case, the Launcher may call the setVsyncRate interface of the SF to request the SF to cancel the vSync signal, to trigger the SF to end the periodically distributing the vSync signal to the Launcher, to reduce resource waste.

For example, the electronic device in this embodiment of this application may be a device that supports a display function, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)\virtual reality (virtual reality, VR) device. A specific form of the electronic device is not specially limited in embodiments of this application. The following mainly describes this application by using an example in which the electronic device is a mobile phone.

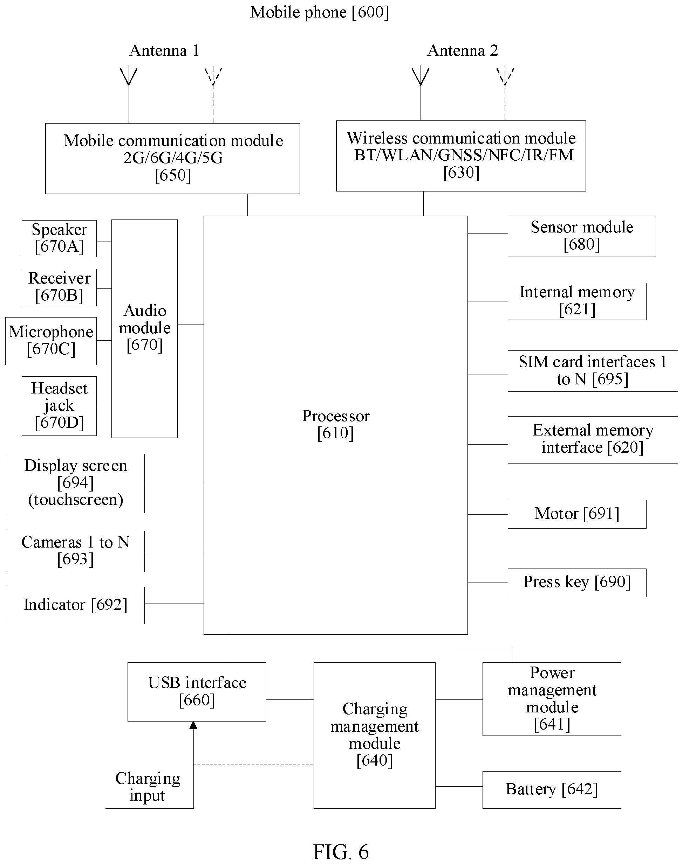

FIG. 6 is a diagram of a hardware structure of an electronic device according to an embodiment of this application. As shown in FIG. 6, an example in which the electronic device is a mobile phone 600 is used. The electronic device may include a processor 610, an external memory interface 620, an internal memory 621, a universal serial bus (universal serial bus, USB) interface 630, a charging management module 640, a power management module 641, a battery 642, an antenna 1, an antenna 2, a mobile communication module 650, a wireless communication module 660, an audio module 670, a speaker 670A, a receiver 670B, a microphone 670C, a headset jack 670D, a sensor module 680, a press key 690, a motor 691, an indicator 692, cameras 693, a display screen 694, subscriber identification module (subscriber identification module, SIM) card interfaces 695, and the like.

It may be understood that the structure illustrated in this embodiment does not constitute a specific limitation on the mobile phone 600. In some other embodiments, the mobile phone 600 may include more or fewer components than those shown in the figure, or some components may be combined, or some components may be split, or components are arranged in different manners. The components in the figure may be implemented by hardware, software, or a combination of software and hardware.

The processor 610 may include one or more processing units. For example, the processor 610 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate devices, or may be integrated into one or more processors.

The charging management module 640 is configured to receive charging input from a charger. The charger may be a wireless charger or a wired charger. In some embodiments of wired charging, the charging management module 640 may receive charging input of the wired charger through the USB interface 630. In some embodiments of wireless charging, the charging management module 640 may receive wireless charging input by using a wireless charging coil of the mobile phone 600. The charging management module 640 may supply power to the mobile phone 600 by using the power management module 641 while charging the battery 642.

The power management module 641 is configured to connect to the battery 642, the charging management module 640, and the processor 610. The power management module 641 receives input from the battery 642 and/or the charging management module 640, to supply power to the processor 610, the internal memory 621, an external memory, the display screen 694, the camera 693, the wireless communication module 660, and the like. The power management module 641 may be further configured to monitor parameters such as a battery capacity, a battery cycle count, and a battery health status (leakage or impedance). In some other embodiments, the power management module 641 may be alternatively disposed in the processor 610. In some other embodiments, the power management module 641 and the charging management module 640 may be alternatively disposed in a same device.

A wireless communication function of the mobile phone 600 may be implemented by using the antenna 1, the antenna 2, the mobile communication module 650, the wireless communication module 660, the modem processor, the baseband processor, and the like.

The display screen 694 is configured to display an image, a video, and the like. In some embodiments, the display screen 694 may be configured to display dynamically changing interface content, such as the home screen motion effects shown in FIG. 1A to FIG. 1F. The display screen 694 includes a display panel. The display panel may use a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a MiniLed, a MicroLed, a Micro-OLED, a quantum dot light emitting diode (quantum dot light emitting diodes, QLED), and the like.

The mobile phone 600 implements a display function by using the GPU, the display screen 694, the application processor, and the like. The GPU is a microprocessor for image processing and is connected to the display screen 694 and the application processor. The GPU is configured to perform mathematical and geometric calculation for graphics rendering. The processor 610 may include one or more GPUs, and the one or more GPUs execute program instructions to generate or change display information.

The mobile phone 600 may implement a photographing function by using the ISP, the camera 693, the video codec, the GPU, the display screen 694, the application processor, and the like. The ISP is configured to process data fed back by the camera 693. The camera 693 is configured to capture a still image or video. An optical image of an object is generated through a lens and is projected onto a photosensitive element. In some embodiments, the mobile phone 600 may include one or N cameras 693, and N is a positive integer greater than 1.

The external memory interface 620 may be configured to be connected to an external storage card such as a Micro SD card, to expand a storage capability of the mobile phone 600. The external storage card communicates with the processor 610 through the external memory interface 620, to implement a data storage function. For example, files such as music and a video are stored in the external storage card.

The internal memory 621 may be configured to store computer-executable program code. The executable program code includes instructions. The processor 610 runs the instructions stored in the internal memory 621, to perform various function applications and data processing of the mobile phone 600.

The mobile phone 600 may implement an audio function such as music playing or recording by using the audio module 670, the speaker 670A, the receiver 670B, the microphone 670C, the headset jack 670D, the application processor, and the like.

The press key 690 includes a power key (also referred to as a power on/off key), a volume key, and the like. The press key 690 may be a mechanical press key or a touch key. The mobile phone 600 may receive key input, and generate key signal input related to a user setting and function control of the mobile phone 600. The motor 691 may generate a vibration prompt. The motor 691 may be configured to provide a vibration prompt for an incoming call, and may be further configured to provide a touch vibration feedback. The indicator 692 may be an indicator light, and may be configured to indicate a charging status or a power change, or may be configured to indicate a message, a missed call, a notification, and the like. The SIM card interface 695 is configured to be connected to a SIM card.

In this embodiment of this application, a software system of the mobile phone 600 may use a layered architecture, an event-driven architecture, a microkernel architecture, a micro service architecture, or a cloud architecture. In the following embodiment, an Android system with a layered architecture is used as an example to describe a software architecture of the mobile phone 600.

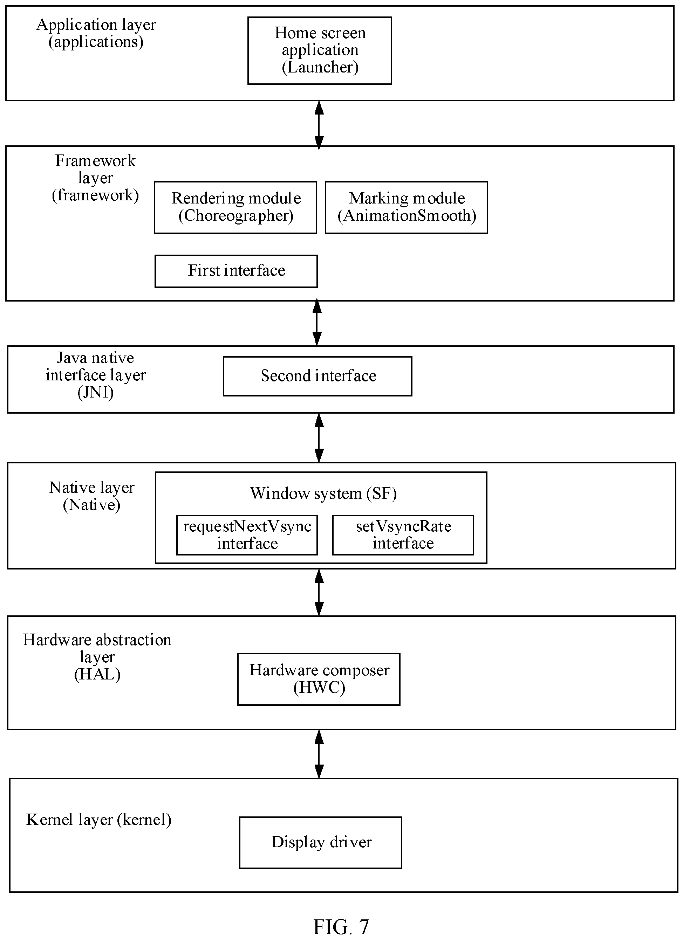

In the layered architecture, software is divided into several layers, and each layer has a clear role and task. The layers communicate with each other through a software interface. In some embodiments, refer to FIG. 7. The Android system may be divided into six layers, which are respectively an application layer (applications), a framework layer (framework), a Java native interface layer (Java Native Interface, JNI), a native layer (Native), a hardware abstraction layer (HAL), and a kernel layer (kernel) from top to bottom.

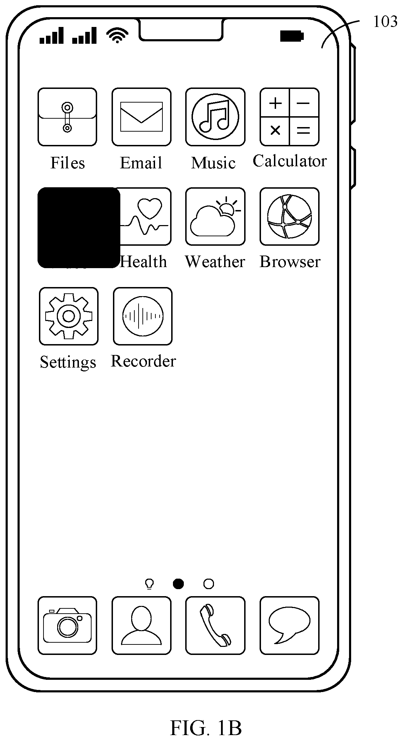

Applications such as Phone, Memos, Home, Browser, Contacts, Camera, Gallery, and Calendar may be installed at the application layer. Only home screen applications (Launcher) are shown in FIG. 7. Application interfaces of these applications all basically need to be displayed by the display screen of the mobile phone 600. For example, the Launcher needs to display, by using the display screen, the application icons on the home screen 101 and on the home screen 103 to the home screen 107 shown in FIG. 1A to FIG. 1F, and display the motion effect corresponding to the home screen 103 to the home screen 107 shown in FIG. 1B to FIG. 1F.

The framework layer provides an application programming interface (application programming interface, API) and a programming framework for the application layer. The framework layer includes a display screen rendering module (Choreographer) and a marking module (AnimationSmooth). The AnimationSmooth may be configured to save, by the application, an on/off state of rendering a plurality of image frames that are consecutive. The on/off state includes an on state and an off state. The on state indicates that the plurality of image frames that are consecutive need to be rendered, and the off state indicates to end rendering of the plurality of image frames that are consecutive.

The Choreographer may be configured to request, by the application, a vSync signal from SF. In other words, an application 1 needs to request a vSync signal from SF by using the Choreographer. In this way, in this specification, the application 1 calls a requestNextVsync interface or a setVsyncRate interface to request a vSync signal from SF. Essentially, the Choreographer calls the requestNextVsync interface or the setVsyncRate interface to request the vSync signal from the SF. In addition, the application 1 calls the setVsyncRate interface to request the SF to cancel the vSync signal. Essentially, the Choreographer calls the setVsyncRate interface to request the SF to cancel the vSync signal.

Moreover, the Choreographer may be configured to implement rendering by the application. In other words, the application 1 implements rendering by using the Choreographer. In this way, in this specification, the SF distributes the vSync signal to the application 1, to trigger the application 1 to perform rendering. Essentially, the SF distributes the vSync signal to the Choreographer, to trigger the Choreographer to perform rendering.

The native layer provides various services to an upper layer (such as the framework layer). The native layer includes the SF. The SF may be configured for composition and sending for display as well as refresh rate control. The refresh rate control is to control, by distributing the vSync signal to the application, the application to start rendering after the display screen performs a refresh. The native layer includes the requestNextVsync interface and the setVsyncRate interface of the SF, and both the interfaces may request the vSync signal. Each time the requestNextVsync interface requests the vSync signal once, the SF distributes the vSync signal once. Each time the setVsyncRate interface requests a vSync signal, the SF periodically distributes the vSync signal.

It should be noted here that the framework layer is usually written in a Java language, and in this case, the framework layer may also be referred to as a Java layer. The native layer is written in a C++/C language, and in this case, the native layer may also be referred to as a C++/C layer. The Java native interface layer is a bridge between the framework layer and the native layer and is configured to interlink the framework layer and the native layer, so that the framework layer and the native layer are accessible to each other.

The Java native interface layer includes an interface open to Java, so that the framework layer calls the services provided by the native layer through the interface. In this embodiment of this application, the setVsyncRate interface of the SF needs to be called to request the vSync signal from the SF. However, the setVsyncRate interface in the SF is only an interface at the native layer and is not open to Java. Based on this, in some embodiments, interfaces need to be added to the framework layer and the Java native interface layer respectively, such as a first interface and a second interface in FIG. 7. The Choreographer at the framework layer and the SF at the native layer are interlinked through the first interface, the second interface, and the setVsyncRate interface, so that the application can call the setVsyncRate interface to request the vSync signal from the SF.

The hardware abstraction layer encapsulates an underlying hardware driver and provides a common interface for calling the driver for an upper layer, so that the upper layer can call the driver to drive corresponding hardware to work. The hardware abstraction layer includes a hardware composer (Hwcomposer, HWC). The HWC may be combined with the SF to complete composition processing. The SF may use OpenGL ES to compose layers, but the composition requires and consumes GPU resources. The HWC performs layer composition by using a hardware device, to reduce a composition pressure of the GPU.

The kernel layer includes a driver that drives hardware to work, such as a display driver (Display driver). The display driver is configured to drive the display screen to work, and transmit an image data stream (such as an RGB image data stream) from the upper layer (such as the hardware abstraction layer) to the display screen for display (to be specific, send for display).

The method for requesting a vSync signal provided in this embodiment of this application may be implemented in the mobile phone 600 having the foregoing hardware structure and software structure. The following first briefly describes the method for requesting a vSync signal provided in this embodiment of this application with reference to the foregoing software architecture of the mobile phone 600.

After determining that the plurality of image frames that are consecutive need to be rendered, the application 1 may call the first interface at the framework layer, the second interface at the Java native interface layer, and the setVsyncRate interface at the native layer in sequence by using the Choreographer to request the vSync signal from the SF. After receiving the request of the Choreographer for the vSync signal by calling the setVsyncRate interface, the SF periodically distributes the vSync signal to the Choreographer, to periodically trigger the Choreographer to render an image of the application 1.

Then, after determining to end the rendering the plurality of image frames that are consecutive, the application 1 may call the first interface, the second interface, and the setVsyncRate interface in sequence by using the Choreographer to request the SF to cancel the vSync signal. After receiving the request of the Choreographer for canceling the vSync signal by calling the setVsyncRate interface, the SF ends the periodically distributing the vSync signal to the Choreographer. In this case, the Choreographer may no longer continue to be periodically triggered to render the image of the application 1.

The application 1 may determine whether the plurality of image frames that are consecutive need to be rendered based on its own display logic.

In Example 1, the scenario shown in FIG. 1A to FIG. 1F is used as an example. After Launcher detects a tap operation by a user on an application icon (such as the application icon 102 of the video application) on a home screen, display logic of the Launcher is to display a home screen motion effect of enlarging from an application icon to an application interface. The home screen motion effect needs to be implemented by displaying a plurality of motion effect frames that are dynamically changing and consecutive, that is, a plurality of image frames, by the Launcher. In this case, after detecting the tap operation by the user on the application icon on the home screen, the Launcher may determine that the plurality of image frames that are consecutive need to be rendered.

In Example 2, Launcher is still used as an example. After the Launcher detects a sliding (such as sliding leftward or rightward) operation by a user on a home screen, the home screen may also slide along with the sliding operation by the user. In addition, after the sliding operation by the user ends, display logic of Launcher is to continue to slide the home screen until a specific screen of the home screen is fully displayed (for example, return to a screen displayed before the sliding operation, switch to a previous screen, or switch to a next screen). The foregoing process of continuing to slide the home screen until a specific screen of the home screen is fully displayed needs to be implemented by displaying a plurality of image frames that are dynamically changing and consecutive by the Launcher. In this case, after detecting the sliding operation by the user on the home screen ends, the Launcher may determine that the plurality of image frames that are consecutive need to be rendered.

In Example 3, a calendar application is used as an example. After the calendar application detects a tap operation by a user on a specific day in a month view, display logic of the calendar application is to display a transition motion effect from the month view to a view of the specific day, and finally display the view of the specific day. The transition motion effect needs to be implemented by displaying a plurality of image frames that are dynamically changing and consecutive by the calendar application. In this case, after detecting the tap operation by the user on the specific day in the month view, the calendar application may determine that the plurality of image frames that are consecutive need to be rendered.

In other words, if the application 1 needs to display the plurality of image frames that are dynamically changing and consecutive within a short time period after a touch operation by the user ends, for example, the application 1 needs to display a motion effect such as sliding and scaling at a time interval less than 20 ms, the application 1 may determine that the plurality of image frames that are consecutive need to be rendered. However, after the rendering of the plurality of image frames is completed, or after exit of the application 1 running in a foreground is detected before the display of the plurality of image frames ends, or if it is detected that the display screen is off before the display of the plurality of image frames ends, the application 1 may determine to end the rendering of the plurality of image frames that are consecutive.

Generally, each time before rendering a new image frame, the application 1 needs to request the vSync signal by using the Choreographer, to request the SF to distribute the vSync signal. Moreover, the Choreographer may render the image of the application 1 only after receiving the vSync signal distributed by the SF. In this embodiment of this application, the application 1 only needs to request the vSync signal once by using the Choreographer after determining that the plurality of image frames that are consecutive need to be rendered. In addition, after determining to end the rendering of the plurality of image frames that are consecutive, the application 1 requests to cancel the vSync signal by using the Choreographer. In other words, even though the plurality of image frames that are consecutive need to be rendered, it is only needed to request the vSync signal once by using the Choreographer, without needing to request the vSync signal by using the Choreographer before each time rendering an image frame.

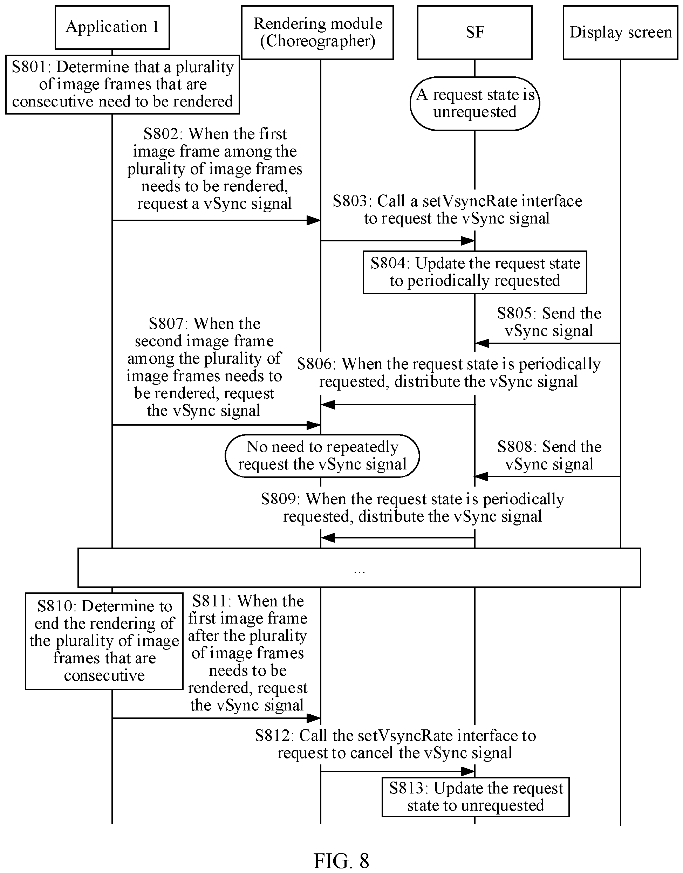

Refer to FIG. 8. In some embodiments, when a plurality of image frames that are consecutive need to be rendered, a specific implementation of requesting a vSync signal only once by using the Choreographer includes:
S801: The application 1 determines that a plurality of image frames that are consecutive need to be rendered.

S802: When the first image frame among the plurality of image frames (which may also be referred to as a first image) needs to be rendered, the application 1 requests a vSync signal from the Choreographer.

When the application 1 needs to render any image frame, the application 1 first requests the vSync signal from the Choreographer to request to render any image frame (such as the first image), to trigger the Choreographer to further request the vSync signal from the SF. For example, the application 1 may call a scheduleVsyncLocked interface of the Choreographer to trigger the Choreographer to request the vSync signal from the SF.

For convenience of description, a message sent by the application 1 to the Choreographer for requesting the vSync signal may be referred to as a first message.

S803: The Choreographer calls the setVsyncRate interface to request the vSync signal from the SF.

In other words, when receiving the request for the vSync signal from the application 1 for the first time after the application 1 determines to render the plurality of image frames, the Choreographer may call the setVsyncRate interface to request the vSync signal from the SF. To be specific, when the first image frame among the plurality of image frames is requested to be rendered, the setVsyncRate interface is called to request the vSync signal from the SF. In this case, the moment t1 in FIG. 5 may be a moment when rendering of the first image frame among the plurality of image frames is requested.

For example, a parameter carried when the Choreographer calls the first interface, the second interface, and the setVsyncRate interface is a first parameter and indicates to request the vSync signal. For example, if the first parameter is 1, the setVsyncRate interface that is called is specifically setVsyncRate (1), and this indicates that the setVsyncRate interface is called to request the vSync signal.

S804: The SF updates a request state to periodically requested, and an initial state of the request state in the SF is unrequested.

In this embodiment, the request state further includes periodically requested. The request state is periodically requested, and this may indicate that the SF periodically distributes the vSync signal to the Choreographer.

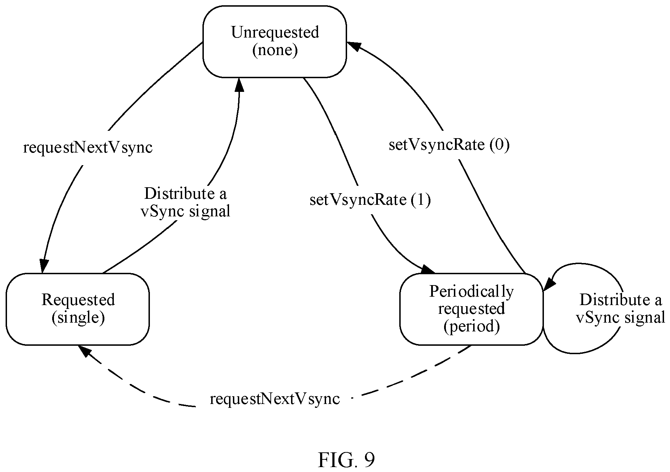

For example, the request state and a state transfer process of the request state are shown in FIG. 9. The request state includes unrequested (for example, none), requested (for example, single), and periodically requested (for example, period). If the request state is unrequested, this indicates that there is no need to distribute the vSync signal to the application 1. If the request state is requested, this indicates that the vSync signal needs to be distributed to the application 1 once. If the request state is periodically requested, this indicates that the vSync signal needs to be periodically distributed to the application 1. The initial state of the request state is unrequested. When the request state is unrequested, the Choreographer calls the requestNextVsync interface to request the vSync signal from the SF, and the request state may be updated to requested (refer to related descriptions in FIG. 5). When the request state is requested, after the SF distributes the vSync signal to the application 1 once, the request state may be updated to unrequested (refer to related descriptions in FIG. 5). When the request state is unrequested, the Choreographer calls the setVsyncRate interface (such as the setVsyncRate (1)) to request the vSync signal from the SF, and the request state may be updated to periodically requested, as described in S803 and S804.

It should be noted here that the request state in this specification is described for the application 1. Actually, the SF maintains a request state of each application. The request state of each application may indicate a requirement of a corresponding application for a vSync signal.

In this embodiment, when the first image frame among the plurality of image frames needs to be rendered, the setVsyncRate interface is called to request the vSync signal from the SF. In this way, after it is determined that the plurality of image frames that are consecutive need to be rendered, the SF may be enabled timely to update the request state to periodically requested. Subsequently, the SF may periodically distribute the vSync signal to trigger the rendering of the plurality of image frames in sequence.

S805: The display screen sends the vSync signal to the SF.

After completing a refresh, the display screen may send the vSync signal to the SF once.

S806: When the request state is periodically requested, the SF distributes the vSync signal to the Choreographer.

It should be noted here that, as shown in FIG. 9, when the request state is periodically requested, after distributing the vSync signal to the Choreographer, the SF may not update the request state to unrequested, and may keep unchanged as periodically requested. In this way, after receiving the vSync signal subsequently, the SF may continue to distribute the vSync signal to the Choreographer, to implement periodic distribution.

After receiving the vSync signal, the Choreographer may render the first image frame among the plurality of image frames, then send the first image frame to the SF for composition, and finally send the first image frame for display. Details are not described herein again.

S807: When the second image frame among the plurality of image frames needs to be rendered, the application 1 requests the vSync signal from the Choreographer.

After the foregoing S802 to S804, the SF already updates the request state to periodically requested. Subsequently, the SF may periodically distribute the vSync signal to trigger the rendering of the plurality of image frames in sequence. In this case, when an image (also referred to as a second image) among the plurality of image frames other than the first image frame is requested to be rendered, even though the application 1 may request the vSync signal from the Choreographer, the Choreographer does not need to repeatedly request the vSync signal from the SF, for example, does not need to call the setVsyncRate interface to request the vSync signal from the SF. In this way, when the plurality of image frames that are consecutive need to be rendered, the vSync signal may be requested only once by using the Choreographer.

For convenience of description, a moment when rendering of any other image frame among the plurality of image frames than the first image frame is requested may be referred to as a third moment.

S808: The display screen sends the vSync signal to the SF.

After performing a refresh again, the display screen may display an image that is obtained after S806 and that is rendered by the Choreographer, then sent to the SF for composition, and finally sent for display, and the display screen sends the vSync signal to the SF.

S809: When the request state is periodically requested, distribute the vSync signal to the Choreographer.

After receiving the vSync signal, the Choreographer may render the second image frame among the plurality of image frames, then send the second image frame to the SF for composition, and finally send the second image frame for display. Details are not described herein again.

After that, provided that the request state remains periodically requested, after the display screen sends the vSync signal to the SF, the SF may continue to distribute the vSync signal to the Choreographer, and the Choreographer may continue to render the third image frame, the fourth image frame, ... among the plurality of image frames.

S810: The application 1 determines to end the rendering of the plurality of image frames that are consecutive.

S811: When the first image frame after the plurality of image frames needs to be rendered, the application 1 requests the vSync signal from the Choreographer.

After the rendering of the plurality of image frames is completed, when a new image frame (to be specific, the first image frame after the plurality of image frames, which may also be referred to as a third image) needs to be rendered, the application 1 may also request the vSync signal from the Choreographer to request to render the new image frame.

S812: The Choreographer calls the setVsyncRate interface to request the SF to cancel the vSync signal.

In this embodiment, after completing the rendering of the plurality of image frames, when receiving the request for the vSync signal from the application 1 for the first time, the Choreographer may first call the setVsyncRate interface to request the SF to cancel the vSync signal. To be specific, when the first image frame after the plurality of image frames is requested to be rendered, the setVsyncRate interface is called to request the SF to cancel the vSync signal. In this case, the moment t2 in FIG. 5 may be a moment when rendering of the first image frame after the plurality of image frames is requested.

For example, a parameter carried when the Choreographer calls the first interface, the second interface, and the setVsyncRate interface is a second parameter and indicates to request to cancel the vSync signal. For example, if the second parameter is 0, the setVsyncRate interface that is called is specifically setVsyncRate (0), and this indicates the setVsyncRate interface is called to request to cancel the vSync signal.

S813: The SF updates the request state to unrequested.

Still refer to FIG. 9. When the request state is periodically requested, the Choreographer calls the setVsyncRate interface (such as the setVsyncRate (0)) to request the SF to cancel the vSync signal, and the request state may be updated to unrequested.

After the request state is updated to unrequested, after receiving the vSync signal subsequently, the SF may not continue to periodically distribute the vSync signal.

In this embodiment, after the rendering of the plurality of image frames is completed, and a new image frame needs to be rendered, the setVsyncRate interface is called to request the SF to cancel the vSync signal, so that after the rendering of the plurality of image frames is completed, the SF may be enabled timely to update the request state to unrequested. Subsequently, the SF may not periodically distribute the vSync signal, so that resources can be saved.

In the foregoing embodiment, a periodicity being 1 is mainly used for description. To be specific, when calling the setVsyncRate interface to request the vSync signal from the SF, the Choreographer carries a parameter indicating that the periodicity is 1, such as setVsyncRate (1), and 1 in parentheses indicates that the periodicity is 1. Then, after each time receiving the vSync signal, the SF may distribute the vSync signal to the Choreographer. Certainly, the periodicity may alternatively be 2, 3, 4, .... When calling the setVsyncRate interface to request the vSync signal from the SF, the Choreographer carries a parameter indicating that the periodicity is n, such as setVsyncRate (n), and n in parentheses indicates that the periodicity is n. When the periodicity is 2, after each time receiving the vSync signal twice, the SF distributes the vSync signal to the Choreographer once, and when the periodicity is 3, after each time receiving the vSync signal three times, the SF distributes the vSync signal to the Choreographer once, ....

During the use of the mobile phone 600, there are a large quantity of scenarios in which there is no need to render a plurality of image frames that are consecutive. A timing function in a clock application is used as an example. A countdown is usually updated in seconds (s). For example, if a countdown is 15 minutes, and 15:00 is currently displayed, 14:59 is displayed next after 1s, and the 1s is completely enough for a user to perform an operation of exiting the clock application running in the foreground or is enough for a user to perform an operation of turning off the screen. In other words, it is difficult for the clock application to predict whether countdown images need to be continued to display, for example, images corresponding to 14:59, 14:58, 14:57, ... continue to be displayed. Clearly, the timing function of the clock application does not belong to the scenario in which a plurality of image frames that are consecutive need to be rendered. In these scenarios, an application usually only needs to render one image frame when a specific condition is satisfied. For example, using the foregoing timing function of the clock application as an example, the clock application only needs to render a new countdown image fame every 1s. For another example, using a calculator application as an example, the calculator application only needs to render a new image frame after detecting a tap operation by a user on a number or a symbol on a keyboard of the calculator.

To be specific, in these scenarios, if the foregoing periodic distribution manner is used, each time before rendering a new image frame, an application needs to call the setVsyncRate interface to request a vSync signal from the SF, to trigger the SF to distribute the vSync signal from the display screen to the application. In addition, after rendering of a new image frame is completed, the application needs to call the setVsyncRate interface to request the SF to cancel the vSync signal, to trigger the SF to end distributing the vSync signal from the display screen to the application. In other words, the setVsyncRate interface needs to be called twice to render an image frame, clearly leading to resource waste.

In view this, in some embodiments, in a scenario in which a plurality of image frames that are consecutive need to be rendered, the setVsyncRate interface is called to request the vSync signal from the SF. In a scenario in which there is no need to render a plurality of image frames that are consecutive, the requestNextVsync interface is called to request the vSync signal from the SF.

In this embodiment, the application 1 may record an on/off state (which may also be referred to as a first on/off state) of whether to render the plurality of image frames that are consecutive. The on/off state includes an on state (for example, true) and an off state (for example, false). An initial state of the on/off state is the off state. The on/off state being the off state indicates that there is no need to render a plurality of image frames that are consecutive. The on/off state being the on state indicates that a plurality of image frames that are consecutive need to be rendered. When the application 1 needs to render any image frame, after requesting the vSync signal from the Choreographer, the Choreographer may first query the on/off state, and call the requestNextVsync interface or the setVsyncRate interface based on the on/off state to request the vSync signal from the SF.

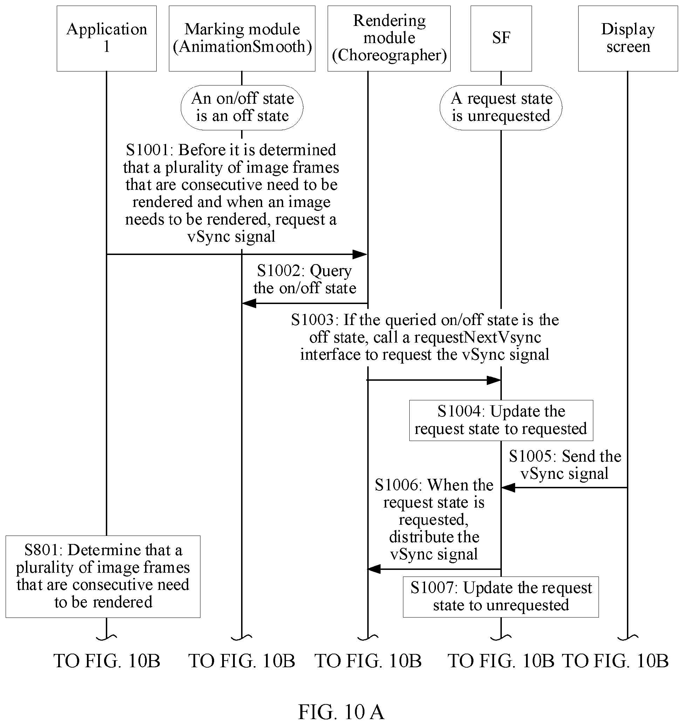

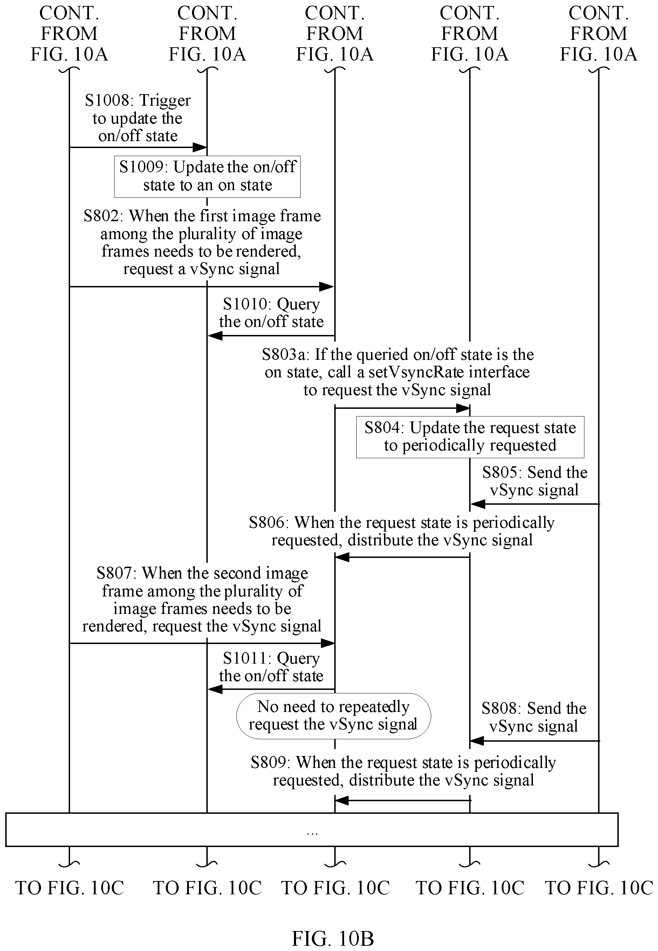

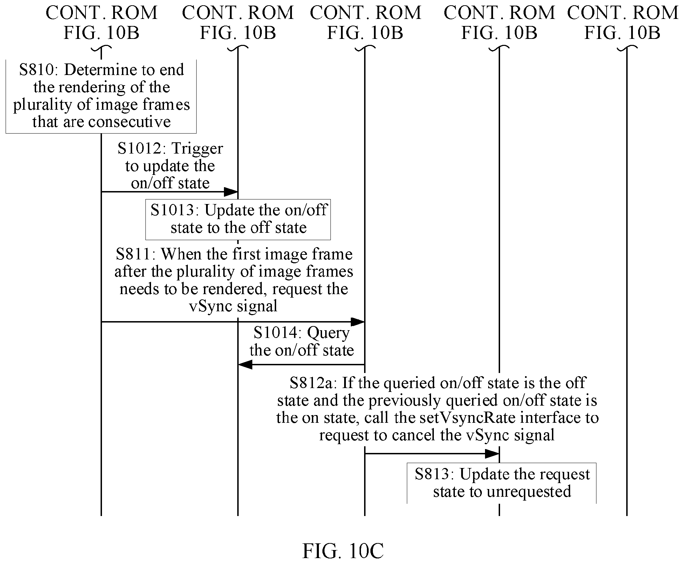

Refer to FIG. 10A to FIG. 10C. An example in which the application 1 stores the on/off state in the AnimationSmooth at the framework layer shown in FIG. 7 is used. Before S801 in FIG. 8, the method for requesting a vSync signal in this embodiment further includes S1001 to S1007.

S1001: Before it is determined that a plurality of image frames that are consecutive are rendered and when an image needs to be rendered, the application 1 requests a vSync signal from the Choreographer.

S1002: The Choreographer queries the on/off state from the AnimationSmooth, and the initial state of the on/off state in the AnimationSmooth is the off state.

S1003: If the on/off state queried by the Choreographer is the off state, call the requestNextVsync interface to request the vSync signal from the SF.

In this embodiment, the Choreographer first queries the on/off state in the AnimationSmooth before requesting the vSync signal. If it is queried that the on/off state is the off state, it indicates that there is no need to render a plurality of image frames that are consecutive currently. In this case, the Choreographer may call the requestNextVsync interface to request the vSync signal. In this way, the vSync signal is requested once and distributed once.

S1004: The SF updates the request state to requested, and the initial state of the request state of the application 1 in the SF is unrequested.

S1005: The display screen sends the vSync signal to the SF.

S1006: When the request state is requested, the SF distributes the vSync signal to the Choreographer.

After receiving the vSync signal, the Choreographer may start rendering, then sends the image to the SF for composition, and finally sends the image for display.

S1007: The SF updates the request state to unrequested.

After the foregoing S1001 to S1007, before the plurality of image frames that are consecutive need to be rendered, for one image frame, the requestNextVsync interface may only need to be called to request the vSync signal from the SF once, and the SF may distribute the vSync signal once to trigger the Choreographer to complete the rendering, without needing to request the vSync signal once and request to cancel the vSync signal. In this way, cross-process communication can be reduced and resources can be saved.

It should be noted that only a processing process of rendering one image frame before it is determined that a plurality of image frames that are consecutive need to be rendered is described in the foregoing S1001 to S1007. In practice, before it is determined that a plurality of image frames that are consecutive need to be rendered, there may be at least two image frames that need to be rendered, and each image frame may be processed by using the process of the foregoing S1001 to S1007.

Still refer to FIG. 10A to FIG. 10C. After the application 1 determines that a plurality of image frames that are consecutive need to be rendered, a difference from the foregoing embodiment shown in FIG. 8 is that S1008 and S1009 are further included after S801. After the application 1 requests the vSync signal from the Choreographer, a step of querying the on/off state in the AnimationSmooth is further included, for example, S1010 and S1011, and S803 is specifically S803a.

S801: The application 1 determines that a plurality of image frames that are consecutive need to be rendered.

S1008: The application 1 triggers the AnimationSmooth to update the on/off state.

S1009: The AnimationSmooth updates the on/off state to the on state.

In this embodiment, when determining that the plurality of image frames that are consecutive need to be rendered, the application 1 first needs to update the on/off state in the AnimationSmooth to the on state, to indicate that a plurality of image frames that are consecutive need to be rendered.

S802: When the first image frame among the plurality of image frames needs to be rendered, the application 1 requests the vSync signal from the Choreographer.

S1010: The Choreographer queries the on/off state from the AnimationSmooth.

S803a: If querying that the on/off state is the on state, the Choreographer calls the setVsyncRate interface to request the vSync signal.

In this embodiment, the Choreographer first queries the on/off state in the AnimationSmooth before requesting the vSync signal. If it is queried that the on/off state is the on state, it indicates that there is a need to render a plurality of image frames that are consecutive currently. In this case, the Choreographer may call the setVsyncRate interface to request the vSync signal.

S804: The SF updates a request state to periodically requested.

S805: The display screen sends the vSync signal to the SF.

S806: When the request state is periodically requested, the SF distributes the vSync signal to the Choreographer.

S807: When the second image frame among the plurality of image frames needs to be rendered, the application 1 requests the vSync signal from the Choreographer.

S1011: The Choreographer queries the on/off state from the AnimationSmooth.

Similarity, the Choreographer first queries the on/off state in the AnimationSmooth before requesting the vSync signal. If it is queried that the on/off state is the on state, it indicates that there is a need to render a plurality of image frames that are consecutive currently. However, after the foregoing S802, S1010, S803a, and S804, the SF already updates the request state to periodically requested. Subsequently, the SF may periodically distribute the vSync signal to trigger the rendering of the plurality of image frames in sequence. Therefore, when the second image frame and a subsequent image among the plurality of image frames need to be rendered, even though the application 1 requests the vSync signal and the Choreographer also queries that the on/off state is the on state, the Choreographer does not need to repeatedly request the vSync signal from the SF, for example, does not need to call the setVsyncRate interface to request the vSync signal from the SF.

S808: The display screen sends the vSync signal to the SF.

S809: When the request state is periodically requested, distribute the vSync signal to the Choreographer.

Still refer to FIG. 10A to FIG. 10C. After the application 1 determines to end the rendering of the plurality of image frames that are consecutive, a difference from the foregoing embodiment shown in FIG. 8 is that S1012 and S1013 are further included after S810. After the application 1 requests the vSync signal from the Choreographer, a step of querying the on/off state in the AnimationSmooth is further included, for example, S1014, and S812 is specifically S812a.

S810: The application 1 determines to end the rendering of the plurality of image frames that are consecutive.

S1012: The application 1 triggers the AnimationSmooth to update the on/off state.

S1013: The AnimationSmooth updates the on/off state to the off state.

In this embodiment, when determining to end the rendering of the plurality of image frames that are consecutive, the application 1 first needs to update the on/off state in the AnimationSmooth to the off state, to indicate that the rendering of the plurality of image frames that are consecutive ends.

S811: When the first image frame after the plurality of image frames needs to be rendered, the application 1 requests the vSync signal from the Choreographer.

S1014: The Choreographer queries the on/off state from the AnimationSmooth.

S812a: If querying that the on/off state is the off state and previously querying that the on/off state is the on state, the Choreographer calls the setVsyncRate interface to request to cancel the vSync signal.

If the Choreographer queries that the on/off state is the off state, it indicates that, currently, there is no need to render the plurality of image frames that are consecutive. In view of this, if it is previously queried that the on/off state is the on state, it indicates that the need to render the plurality of image frames that are consecutive is just completed. In this case, the Choreographer calls the setVsyncRate interface to request to cancel the vSync signal.

S813: The SF updates the request state to unrequested.

Further, in some embodiments, on/off states may be maintained respectively in the AnimationSmooth and the Choreographer. In this way, in the scenario in which a plurality of image frames that are consecutive need to be rendered, the setVsyncRate interface is called to request the vSync signal from the SF. In the scenario in which there is no need to render a plurality of image frames that are consecutive, the requestNextVsync interface is called to request the vSync signal from the SF. In addition, timing of calling the setVsyncRate interface to request the vSync signal from the SF and to request the SF to cancel the vSync signal may be determined accurately. Initial states of the on/off states in the AnimationSmooth and the Choreographer are both off states. To distinguish from the first on/off state, the on/off state in the Choreographer may be referred to as a second on/off state.

In this embodiment, before requesting the vSync signal, the Choreographer needs to first query the on/off state in the AnimationSmooth, determines, based on the queried on/off state and the local on/off state in the Choreographer, whether to request the vSync signal from the SF, and determines to call the setVsyncRate interface or the requestNextVsync interface to request the vSync signal from the SF.

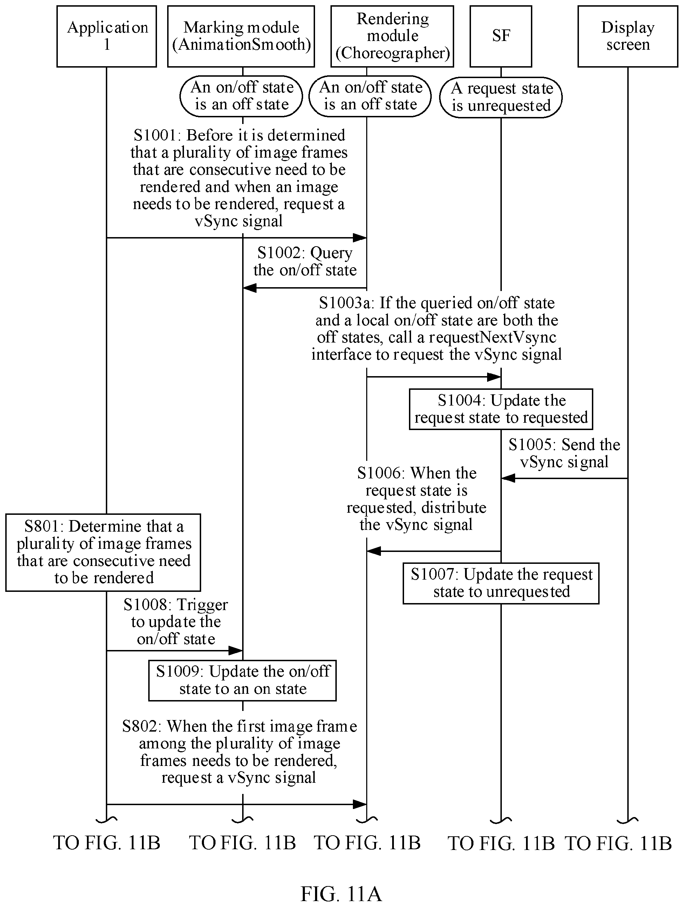

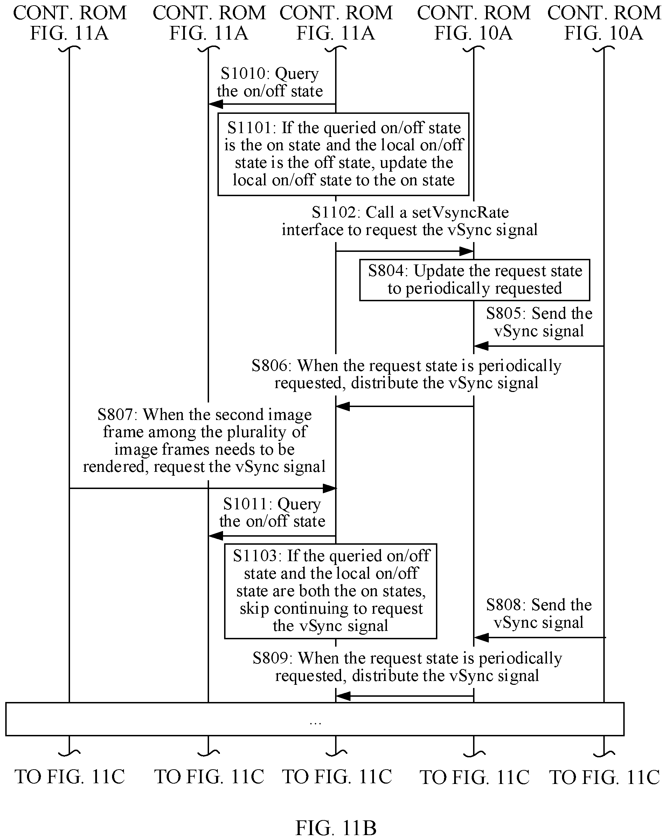

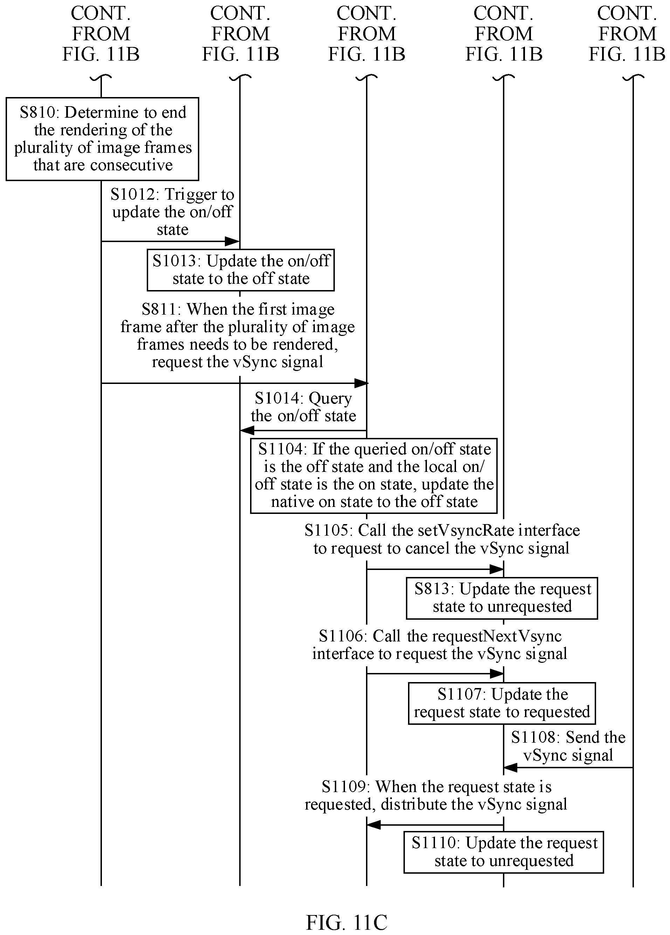

Refer to FIG. 11A to FIG. 11C. This embodiment includes the following steps:
S1001: Before it is determined that a plurality of image frames that are consecutive need to be rendered and when an image need to be rendered, the application 1 requests a vSync signal from the Choreographer.

For convenience of description, a moment when any image frame that needs to be rendered before rendering of the plurality of image frames is requested may be referred to as a fourth moment.

S1002: The Choreographer queries the on/off state from the AnimationSmooth, and the initial state of the on/off state in the AnimationSmooth is the off state.

Still refer to FIG. 11A to FIG. 11C. The foregoing S1003 in FIG. 10A to FIG. 10C may be specifically S1003a as follows:
S1003a: If the on/off state queried by the Choreographer and the local on/off state of the Choreographer are both the off states, call the requestNextVsync interface to request the vSync signal from the SF.

For convenience of description, the request for calling the requestNextVsync interface to request the vSync signal to render any image frame before the plurality of image frames may be referred to as a fourth request.

In this embodiment, the Choreographer first queries the on/off state in the AnimationSmooth before requesting the vSync signal. If it is queried that the on/off state is the off state, it indicates that there is no need to render a plurality of image frames that are consecutive currently. In this case, the Choreographer needs to call the requestNextVsync interface to request the vSync signal, to request the vSync signal once and distribute the vSync signal once. In addition, the local on/off state of the Choreographer being the off state indicates that the need to render the plurality of image frames that are consecutive is not just completed. Therefore, the Choreographer does not need to call the requestNextVsync interface to request to cancel the vSync signal. In this case, when the queried on/off state and the local on/off state are both the off states, the requestNextVsync interface may be called to request the vSync signal.

S1004: The SF updates the request state to requested, and the initial state of the request state of the application 1 in the SF is unrequested.

S1005: The display screen sends the vSync signal to the SF.

S1006: When the request state is requested, the SF distributes the vSync signal to the Choreographer.

S1007: The SF updates the request state to unrequested.

S801: The application 1 determines that a plurality of image frames that are consecutive need to be rendered.

S1008: The application 1 triggers the AnimationSmooth to update the on/off state.

S1009: The AnimationSmooth updates the on/off state to the on state.

S802: When the first image frame among the plurality of image frames needs to be rendered, the application 1 requests the vSync signal from the Choreographer.

S1010: The Choreographer queries the on/off state from the AnimationSmooth.

Still refer to FIG. 11A to FIG. 11C. The foregoing S803a in FIG. 10A to FIG. 10C further includes the following S1101 and S1102:

S1101: If the on/off state queried by the Choreographer is the on state and the local on/off state of the Choreographer is the off state, update the local on/off state of the Choreographer to the on state.

The local on/off state of the Choreographer is updated to the on state, so that the local on/off state of the Choreographer is consistent with the request of whether the application 1 needs to render the plurality of image frames that are consecutive. For example, if the application 1 needs to render the plurality of image frames that are consecutive, the local on/off state of the Choreographer is updated to the on state.

S1102: The Choreographer calls the setVsyncRate interface to request the vSync signal from the SF.

In this embodiment, the Choreographer first queries the on/off state in the AnimationSmooth before requesting the vSync signal. If it is queried that the on/off state is the on state and the local on/off state of the Choreographer before the update is the off state, it indicates that the application 1 just changes from not needing to render the plurality of image frames that are consecutive to needing to render the plurality of image frames that are consecutive. In this case, the Choreographer needs to call the setVsyncRate interface to request the vSync signal, to trigger the SF timely to periodically distribute the vSync signal. In this way, the vSync signal is requested once, and the SF periodically distributes the vSync signal.

S804: The SF updates a request state to periodically requested.

S805: The display screen sends the vSync signal to the SF.

S806: When the request state is periodically requested, the SF distributes the vSync signal to the Choreographer.

S807: When the second image frame among the plurality of image frames needs to be rendered, the application 1 requests the vSync signal from the Choreographer.

S1011: The Choreographer queries the on/off state from the AnimationSmooth.

Still refer to FIG. 11A to FIG. 11C. The following S1103 is further included after the foregoing S1011 in FIG. 10A to FIG. 10C:

S1103: If the on/off state queried by the Choreographer and the local on/off state are both the on states, skip continuing to request the vSync signal.

If the on/off state queried by the Choreographer is the on state, it indicates that there is a need to render the plurality of image frames that are consecutive currently. In this case, the Choreographer needs to call the setVsyncRate interface to request the vSync signal. However, if the queried on/off state is consistent with the local on/off state of the Choreographer before the update, it indicates that the application 1 does not just change from not needing to render the plurality of image frames that are consecutive to needing to render the plurality of image frames that are consecutive, and the Choreographer may have already called the setVsyncRate interface to request the vSync signal (for example, S1102). In this case, the Choreographer does not need to repeatedly call the setVsyncRate interface to request the vSync signal. In this way, when the queried on/off state and the local on/off state are both the on states, there is no need to repeatedly call the requestNextVsync interface to request the vSync signal. This can avoid repeatedly calling the requestNextVsync interface to request the vSync signal, and ensure that in a scenario in which a plurality of image frames that are consecutive need to be rendered, a vSync signal is only requested once by calling a requestNextVsync interface.

S808: The display screen sends the vSync signal to the SF.

S809: When the request state is periodically requested, distribute the vSync signal to the Choreographer.

S810: The application 1 determines to end the rendering of the plurality of image frames that are consecutive.

S1012: The application 1 triggers the AnimationSmooth to update the on/off state.

S1013: The AnimationSmooth updates the on/off state to the off state.

S811: When the first image frame after the plurality of image frames needs to be rendered, the application 1 requests the vSync signal from the Choreographer.

S1014: The Choreographer queries the on/off state from the AnimationSmooth.

Still refer to FIG. 11A to FIG. 11C. The foregoing S812a in FIG. 10A to FIG. 10C further includes the following S1104 and S1105:
S1104: If the on/off state queried by the Choreographer is the off state and the local on/off state is the on state, update the local on state to the off state.

The local on/off state of the Choreographer is updated to the off state, so that the local on/off state of the Choreographer is consistent with the request of whether the application 1 needs to render the plurality of image frames that are consecutive. For example, if the application 1 does not need to render the plurality of image frames that are consecutive, the local on/off state of the Choreographer is updated to the off state.

S1105: The Choreographer calls the setVsyncRate interface to request the SF to cancel the vSync signal.

If the on/off state queried by the Choreographer is the off state and the local on/off state of the Choreographer before the update is the on state, it indicates that the application 1 just changes from needing to render the plurality of image frames that are consecutive to not needing to render the plurality of image frames that are consecutive. In this case, the Choreographer needs to first call the setVsyncRate interface to request to cancel the vSync signal, to avoid that the SF still periodically distributes the vSync signal after the need to render the plurality of image frames that are consecutive is completed. In this way, when the need to render the plurality of image frames that are consecutive is completed, the SF is triggered timely to end the periodically distributing the vSync signal.

S813: The SF updates the request state to unrequested.

As of the foregoing S813, the request state is updated from periodically requested to unrequested, then the SF may not continue to periodically distribute the vSync signal. However, the application 1 currently needs to render the first image frame after the plurality of image frames. Still refer to FIG. 11A to FIG. 11C. In this case, after S813, the following S1106 to S1110 further need to be performed to complete rendering of a new image frame after the plurality of image frames.

S1106: The Choreographer calls the requestNextVsync interface to request the vSync signal from the SF.

Because the rendering of the plurality of image frames that are consecutive ends currently, the Choreographer needs to call the requestNextVsync interface to request the vSync signal from the SF, so that when the vSync signal is requested once, the SF distributes the vSync signal once.

In other words, in this embodiment, after calling the setVsyncRate interface to request the SF to cancel the vSync signal, the Choreographer needs to call the requestNextVsync interface to request the vSync signal from the SF. For convenience of description, the request for calling the requestNextVsync interface to request the vSync signal to render the first image frame after the plurality of image frames may be referred to as a third request.

S1107: The SF updates the request state to requested.

S1108: The display screen sends the vSync signal to the SF.

S1109: When the request state is requested, the SF distributes the vSync signal to the Choreographer.

The SF distributing the vSync signal to the Choreographer, may trigger the Choreographer to complete the rendering of a new image frame after the plurality of image frames, then the image frame is sent to the SF for composition, and finally sent for display.

S1110: The SF updates the request state to unrequested.

Here, it should be noted that, in the foregoing embodiment in FIG. 11A to FIG. 11C, only a processing process of one image frame after the plurality of image frames is described. After that, if there is still an image that needs to be rendered, the process shown in FIG. 11A to FIG. 11C may be repeatedly performed. Details are not described again in this embodiment.

In addition, in the foregoing embodiment of FIG. 11A to FIG. 11C, the Choreographer needs to process four different combinations of the on/off state in the AnimationSmooth and the on/off state in the Choreographer by using corresponding manners respectively, including the first manner shown in the foregoing S1003a, the second manner shown in the foregoing S1101 and S1102, the third manner shown in the foregoing S1103, and the fourth manner shown in the foregoing S1104, S1105, and S1106. This ensures that the requestNextVsync interface or the setVsyncRate interface is called accurately to request the vSync signal, or the setVsyncRate interface is called accurately to request to cancel the vSync signal.

In some other embodiments, a difference from the fourth manner shown in the foregoing S1104, S1105, and S1106 in FIG. 11A to FIG. 11C is: When the on/off state queried by the Choreographer is the off state (in other words, the on/off state in the AnimationSmooth is the off state), and the local on/off state is the on state (in other words, the on/off state in the Choreographer is the on state), the local on state is first updated to the off state, and then the requestNextVsync interface is directly called to request the vSync signal from the SF. In this embodiment, the request state may be transferred between periodically requested and requested. As shown by a dashed-line arrow in FIG. 9, when the request state is periodically requested, the Choreographer calls the requestNextVsync interface to request the vSync signal from the SF, and the request state may be updated to requested. In this case, S1107 to S1110 may continue to be perform subsequently, to complete the rendering of the new image frame after the plurality of image frames. In other words, a difference from the foregoing embodiment shown in FIG. 11A to FIG. 11C is that S1105 and S813 may be omitted in this embodiment, and the requestNextVsync interface may be called directly to request the vSync signal from the SF, so that the request state changes from periodically requested to requested. In this way, the vSync signal may be requested once and distributed once while the periodic distribution ends.

In the foregoing embodiment, after the application 1 determines to end the rendering of the plurality of image frames that are consecutive, the SF ends the periodically distributing the vSync signal. In some other embodiments, whether to end the rendering of the plurality of image frames that are consecutive may be alternatively determined by the Choreographer. In this embodiment, the application 1 may request the vSync signal from the Choreographer each time the application 1 needs to render any image frame (also referred to as a fourth image). In this case, the Choreographer may record a processing state as an unprocessed state (also referred to as a first mark). The unprocessed state indicates that there is an image needs to be rendered. Then, after the Choreographer receives the vSync signal from the SF, the processing state may be updated to a processed state. The processed state indicates that there is no image needs to be rendered.

In this embodiment, each time receiving the vSync signal from the SF, the Choreographer may determine whether the processing state is the unprocessed state. If the processing state is the unprocessed state, it indicates that the application 1 has an image that needs to be rendered. In this case, the Choreographer may be triggered to render the image, and the processing state is updated to the processed state. If the processing state is not the unprocessed state, it indicates that the application 1 does not have an image that needs to be rendered. In other words, the vSync signal currently received is redundant. It should be understood that if the vSync signal is requested from the SF by calling the requestNextVsync interface, the SF may request and distribute the vSync signal once and may not distribute a redundant vSync signal. Therefore, the redundant vSync signal is most likely distributed periodically by the SF after the vSync signal is requested from the SF by calling the setVsyncRate interface. For such case, the Choreographer may determine that the need to render the plurality of image frames that are consecutive is completed, and the Choreographer may call the setVsyncRate interface to request the SF to cancel the vSync signal. Subsequently, the SF ends the periodically distributing the vSync signal. In this way, after detecting a redundant vSync signal, the Choreographer may trigger the SF timely to end the periodically distributing the vSync signal.

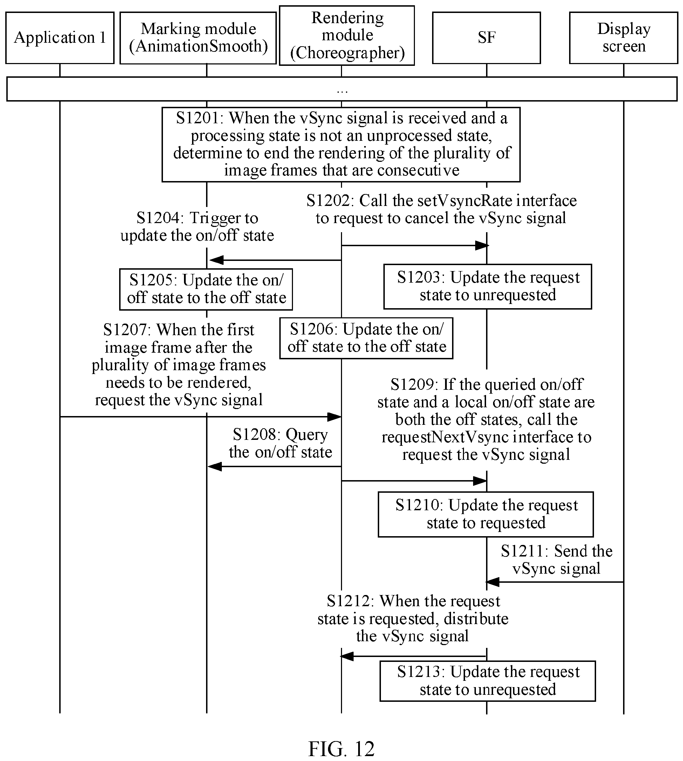

Refer to FIG. 12. In this embodiment, after the Choreographer detects a redundant vSync signal, S810 and subsequent steps in the foregoing embodiment shown in FIG. 11A to FIG. 11C may be replaced with a processing process of S1201 to S1213 in FIG. 12.

S1201: When the Choreographer receives the vSync signal and the processing state is not the unprocessed state, the Choreographer determines to end the rendering of the plurality of image frames that are consecutive.

S1202: The Choreographer calls the setVsyncRate interface to request the SF to cancel the vSync signal.

To be specific, when the Choreographer does not include the unprocessed state and receives the vSync signal from the SF, the Choreographer calls the setVsyncRate interface to request the SF to cancel the vSync signal. For convenience of description, a moment when the Choreographer does not include the unprocessed state and receives the vSync signal from the SF may also be referred to as a second moment.

S1203: The SF updates the request state to unrequested.

S1204: The Choreographer triggers the AnimationSmooth to update the on/off state.

S1205: The AnimationSmooth updates the on/off state to the off state.

S1206: The Choreographer updates the on/off state to the off state.

In other words, after the Choreographer determines to end the rendering of the plurality of image frames that are consecutive, first, as shown in S1202, the Choreographer needs to request the SF to cancel the vSync signal, to enable the SF to end the periodically distributing the vSync signal; second, as shown in S1204, the Choreographer needs to trigger the AnimationSmooth to update the on/off state to the off state, so that the on/off state in the AnimationSmooth indicates the application 1 to end the rendering of the plurality of image frames that are consecutive; and third, as shown in S1206, the Choreographer updates the local on/off state to the off state, so that the local on/off state indicates the application 1 to end the rendering of the plurality of image frames that are consecutive. It should be noted that an execution sequence of the foregoing three steps is not limited to that shown in FIG. 12. During actual implementation, the sequence of the foregoing three steps is not strictly limited.

S1207: When the application 1 needs to render the first image frame after the plurality of image frames, the application 1 requests the vSync signal from the Choreographer.

S1208: The Choreographer queries the on/off state.

S1209: If the on/off state queried by the Choreographer and the local on/off state are both the off states, call the requestNextVsync interface to request the vSync signal from the SF.

In other words, in this embodiment, for the first image frame after the plurality of image frames, the Choreographer may directly call the requestNextVsync interface to request the vSync signal from the SF without needing to call the setVsyncRate interface first to request the SF to cancel the vSync signal.

S1210: The SF updates the request state to requested.

S1211: The display screen sends the vSync signal to the SF.

S1212: When the request state is requested, the SF distributes the vSync signal to the Choreographer.

S1213: The SF updates the request state to unrequested.

An embodiment of this application further provides an electronic device. The electronic device may include: a memory and one or more processors. The memory is coupled to the processor. The memory is configured to store computer program code. The computer program code includes computer instructions. When the processor executes the computer instructions, the electronic device may perform various functions or steps performed by the mobile phone in the foregoing method embodiments.

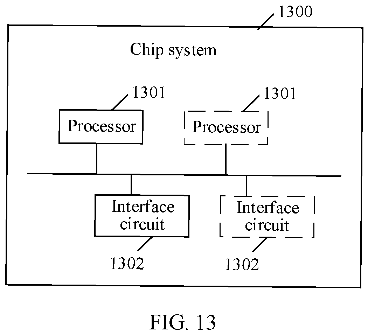

An embodiment of this application further provides a chip system. As shown in FIG. 13, the chip system 1300 includes at least one processor 1301 and at least one interface circuit 1302. The processor 1301 may be interconnected to the interface circuit 1302 through a line. For example, the interface circuit 1302 may be configured to receive a signal from another apparatus (for example, a memory of an electronic device). For another example, the interface circuit 1302 may be configured to send a signal to another apparatus (for example, the processor 1301). For example, the interface circuit 1302 may read instructions stored in the memory and send the instructions to the processor 1301. When the instructions are executed by the processor 1301, the electronic device may be enabled to perform steps in the foregoing embodiments. Certainly, the chip system may further include other discrete devices. This is not specifically limited in embodiments of this application.

An embodiment further provides a computer storage medium. The computer storage medium stores computer instructions. When the computer instructions are run on an electronic device, the electronic device is enabled to perform the foregoing related method steps to implement the image processing method in the foregoing embodiments.

An embodiment further provides a computer program product. When the computer program product runs on a computer, the computer is enabled to perform the foregoing related steps to implement the image processing method in the foregoing embodiments.

**In** addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the image processing method in the foregoing method embodiments.

The electronic device, the computer storage medium, the computer program product, or the chip provided in embodiments may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may clearly understand that for the purpose of convenient and brief description, division of the foregoing function modules is used as an example for illustration. In actual application, the foregoing functions can be allocated to different function modules and implemented based on needs. To be specific, an inner structure of an apparatus is divided into different function modules to implement all or some of the functions described above.

**In** the several embodiments provided in this application, it should be understood that the disclosed apparatus and method may be implemented in other manners. For example, the described apparatus embodiment is merely an example. For example, the module or unit division is merely a logical function division and may be other division during actual implementations. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, to be specific, may be located in one place, or may be distributed in a plurality of different places. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, and an optical disc.

Finally, it should be noted that the foregoing embodiments are merely intended to describe the technical solutions of this application, but are not intended to limit this application. Although this application is described in detail with reference to example embodiments, a person of ordinary skill in the art should understand that modification or equivalent replacement may be made to the technical solutions of this application without departing from the spirit and scope of the technical solutions of this application.

## Claims

1. A method for requesting a vSync signal, applied to an electronic device having a display function and having a first application installed thereon, wherein the method comprises:
at a first moment, calling, by the first application in the electronic device, a setVsyncRate interface of a window system SF in the electronic device to send a first request to the SF, wherein the first request is for requesting a vSync signal;
periodically distributing, by the SF, the vSync signal to the first application in response to the first request; and
at a second moment, calling, by the first application, the setVsyncRate interface to send a second request to the SF, wherein the second request is for requesting to cancel the vSync signal, and after receiving the second request, the SF ends the periodically distributing the vSync signal to the first application.

2. The method according to claim 1, wherein the method further comprises:
determining, by the first application, that a plurality of image frames that are consecutive need to be rendered, wherein the first moment comprises a moment when rendering of a first image is requested, and the first image is the first image frame among the plurality of image frames.

3. The method according to claim 2, wherein the first application records a first on/off state, and a second on/off state is recorded in a rendering module at a framework layer of the electronic device, wherein initial states of the first on/off state and the second on/off state are both off states; and
after the determining, by the first application, that a plurality of image frames that are consecutive need to be rendered, the method further comprises:
updating, by the first application, the first on/off state to an on state; and
the at a first moment, calling, by the first application in the electronic device, a setVsyncRate interface of a window system SF in the electronic device to send a first request to the SF comprises:
at the first moment, sending, by the first application, a first message to the rendering module, wherein the first message is for requesting the vSync signal; and
calling, by the rendering module, the setVsyncRate interface in response to the first message and in response to that the first on/off state is the on state and the second on/off state is the off state, to send the first request to the SF.

4. The method according to claim 3, wherein the first on/off state is the on state, the second on/off state is the off state, and the method further comprises:
updating, by the rendering module, the second on/off state to the on state.

5. The method according to claim 4, wherein the method further comprises:
at a third moment, sending, by the first application, a first message to the rendering module, wherein the first message is for requesting the vSync signal, the third moment is a moment when rendering of a second image is requested, and the second image is any other image among the plurality of image frames than the first image frame; and
skipping requesting, by the rendering module, the vSync signal from the SF in response to the first message and in response to that the first on/off state is the on state and the second on/off state is the on state.

6. The method according to claim 4 or 5, wherein after the sending the first request to the SF, the method further comprises:
determining, by the first application, to end rendering of the plurality of image frames that are consecutive, wherein the second moment comprises a moment when rendering of a third image is requested, and the third image is the first image frame that needs to be rendered by the first application after the rendering of the plurality of image frames is completed.

7. The method according to claim 6, wherein after the determining, by the first application, to end rendering of the plurality of image frames that are consecutive, the method further comprises:
updating, by the first application, the first on/off state to the off state; and
the at a second moment, calling, by the first application, the setVsyncRate interface to send a second request to the SF comprises:
at the second moment, sending, by the first application, a first message to the rendering module, wherein the first message is for requesting the vSync signal; and
calling, by the rendering module, the setVsyncRate interface in response to the first message and in response to that the first on/off state is the off state and the second on/off state is the on state, to send the second request to the SF.

8. The method according to claim 7, wherein the first on/off state is the off state, the second on/off state is the on state, and the method further comprises:
updating, by the rendering module, the second on/off state to the off state.

9. The method according to claim 7 or 8, wherein after the sending the second request to the SF, the method further comprises:
calling, by the first application, a requestNextVsync interface of the SF to send a third request to the SF, wherein the third request is for requesting the vSync signal; and
distributing, by the SF, the vSync signal to the first application once in response to the third request.

10. The method according to claim 4 or 5, wherein the periodically distributing, by the SF, the vSync signal to the first application comprises:
periodically distributing, by the SF, the vSync signal to the rendering module.

11. The method according to claim 10, wherein the method further comprises:
sending, by the first application, the first message to the rendering module when the first application needs to render a fourth image, wherein the fourth image is any image frame that needs to be displayed by the first application, and the fourth image comprises the first image or the second image; and
recording, by the rendering module, a first mark in response to the first message, and deleting the first mark after receiving the vSync signal from the SF, wherein
the second moment comprises a moment when the rendering module receives the vSync signal from the SF when the rendering module comprises no first mark.

12. The method according to claim 11, wherein the method further comprises:
at the second moment, notifying, by the rendering module, the first application to update the first on/off state to the off state, and updating the second on/off state to the off state.

13. The method according to any one of claims 3 to 12, wherein the method further comprises:
at a fourth moment, sending, by the first application, a first message to the rendering module, wherein the first message is for requesting the vSync signal; and
calling, by the rendering module, the requestNextVsync interface in response to the first message and in response to that the first on/off state and the second on/off state are both the off states, and sending a fourth request to the SF, wherein the fourth request is for requesting the vSync signal.

14. The method according to any one of claims 1 to 13, wherein the SF is located at a native layer of the electronic device, the first application is located at an application layer of the electronic device, and before the sending a first request to the SF, the method further comprises:
adding a first interface to the framework layer of the electronic device, and adding a second interface to a Java native interface layer of the electronic device, wherein the first interface and the second interface are interfaces of the setVsyncRate interface that are open to Java; and
the calling, by the first application, the setVsyncRate interface comprises:
calling, by the first application, the setVsyncRate interface through the first interface and the second interface in sequence.

15. The method according to any one of claims 1 to 14, wherein the first request comprises a periodicity n, n ≥ 1, and n is an integer; and
the periodically distributing, by the SF, the vSync signal to the first application in response to the first request comprises:
in response to the first request, distributing, by the SF, the vSync signal once to the first application after the SF receives the vSync signal every n times.

16. An electronic device, wherein the electronic device comprises a memory and a processor, the memory is coupled to the processor, the memory stores computer program code, the computer program code comprises computer instructions, and when the computer instructions are executed by the processor, the electronic device is enabled to perform the method according to any one of claims 1 to 15.

17. A computer-readable storage medium, comprising computer instructions, wherein when the computer instructions are run on an electronic device, the electronic device is enabled to perform the method according to any one of claims 1 to 15.

18. A chip system, wherein the chip system is used in an electronic device comprising a processor and a memory, the chip system comprises one or more interface circuits and one or more processors, the interface circuit is interconnected to the processor through a line, the interface circuit is configured to receive a signal from the memory of the electronic device and send the signal to the processor, the signal comprises computer instructions stored in the memory, and when the processor executes the computer instructions, the electronic device is enabled to perform the method according to any one of claims 1 to 15.
